(19) **Europäisches Patentamt / European Patent Office / Office européen des brevets**

(11) **EP 4 311 335 A1**

(12) **EUROPEAN PATENT APPLICATION**
published in accordance with Art. 153(4) EPC

(43) Date of publication:
**24.01.2024 Bulletin 2024/04**

(21) Application number: **22771747.7**

(22) Date of filing: **16.03.2022**

(51) International Patent Classification (IPC):
*H04W 72/04* (2023.01)    *H04L 5/00* (2006.01)
*H04W 72/12* (2023.01)    *H04B 7/0413* (2017.01)
*H04B 7/06* (2006.01)    *H04B 7/024* (2017.01)

(52) Cooperative Patent Classification (CPC):
**H04B 7/024; H04B 7/0413; H04B 7/06; H04L 5/00; H04W 72/04; H04W 72/12**

(86) International application number:
**PCT/KR2022/003643**

(87) International publication number:
**WO 2022/197081 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.03.2021 KR 20210034740**

(71) Applicant: **LG Electronics Inc.**
**Yeongdeungpo-gu**
**Seoul 07336 (KR)**

(72) Inventors:
- **GO, Seongwon**
  **Seoul 06772 (KR)**
- **KIM, Hyungtae**
  **Seoul 06772 (KR)**
- **KANG, Jiwon**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR TRANSMITTING AND RECEIVING UPLINK IN WIRELESS COMMUNICATION SYSTEM**

(57) Disclosed are a method and a device for transmitting and receiving uplink in a wireless communication system. A method for transmitting uplink according to an embodiment of the present disclosure may comprise the steps of: receiving configuration information related to uplink transmission from a base station; receiving, from the base station, a single piece of downlink control information (DCI) on a first physical downlink control channel (PDCCH) in a first CORSET and a second PDCCH in a second CORESET, wherein the first CORESET and the second CORESET belong to different CORESET pools; and transmitting uplink to the base station on the basis of the DCI. On the basis of a default spatial relationship for the uplink transmission or a default pathloss reference signal (PL RS) being set for a terminal on the basis of the configuration information, the uplink is transmitted on the basis of the default spatial relationship or the default PL RS, and the default spatial relationship or the default PL RS may be determined on the basis of whether one or more CORESETs are configured in a frequency band in which the uplink is to be transmitted.

FIG.13

Receive configuration information related to uplink transmission — S1301

Receive single DCI on a first PDCCH in a first CORESET and a second PDCCH in a second CORESET — S1302

Perform uplink transmission based on DCI — S1303

**Description**

[Technical Field]

The present disclosure relates to a wireless communication system, and in more detail, relates to a method and an apparatus of transmitting and receiving an uplink channel/signal in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and an apparatus for transmitting and receiving an uplink channel/signal.

In addition, an additional technical object of the present disclosure is to provide a method and apparatus for transmitting and receiving an uplink channel/signal based on a default spatial relation and/or a default pathloss reference signal (PL RS).

In addition, an additional technical object of the present disclosure is to provide a method and apparatus for determining a default spatial relation and/or a default PL RS for an uplink channel/signal, when the same downlink control information is repeatedly transmitted based on multiple transmission and reception points (TRPs).

The technical objects to be achieved by the present disclosure are not limited to the above-described technical objects, and other technical objects which are not described herein will be clearly understood by those skilled in the pertinent art from the following description.

[Technical Solution]

A method of performing uplink transmission in a wireless communication system according to an aspect of the present disclosure may include: receiving, from a base station, configuration information related to uplink transmission; receiving, from the base station, single downlink control information (DCI) on a first physical downlink control channel (PDCCH) in a first CORESET and a second PDCCH in a second CORESET, wherein the first CORESET and the second CORESET belong to different CORESET pools; and performing, to the base station, the uplink transmission based on the DCI. Based on a default spatial relation or a default pathloss reference signal (PL RS) for the uplink transmission being configured for the UE by the configuration information, the uplink transmission may be transmitted based on the default spatial relation or the default PL RS, and the default spatial relation or the default PL RS may be determined based on whether one or more CORESETs are configured in a frequency band in which the uplink transmission is to be performed.

A method of receiving uplink transmission in a wireless communication system according to an additional aspect of the present disclosure may include: transmitting, to a user equipment (UE), configuration information related to uplink transmission; transmitting, to the UE, single downlink control information (DCI) on a first physical downlink control channel (PDCCH) in a first CORESET and/or a second PDCCH in a second CORESET, wherein the first CORESET and the second CORESET belong to different CORESET pools; and receiving, from the UE, the uplink transmission based on the DCI. Based on a default spatial relation or a default pathloss reference signal (PL RS) for the uplink transmission being configured for the UE by the configuration information, the uplink transmission may be transmitted based on the default spatial relation or the default PL RS, and the default spatial relation or the default PL RS may be determined based on whether one or more CORESETs are configured in a frequency band in which the uplink transmission is to be performed.

[Advantageous Effects]

According to an embodiment of the present disclosure, ambiguity in an uplink transmission and reception operation based on a default spatial relation and/or a default PL RS may be prevented.

In addition, according to an embodiment of the present disclosure, even if a PDCCH for the same downlink control information is repeatedly transmitted based on multiple TRPs, an uplink transmission and reception operation based on a default spatial relation and/or default PL RS are possible.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 illustrates a method of transmitting multiple TRPs in a wireless communication system to which the present disclosure may be applied.

FIG. 8 is a diagram illustrating a PUCCH spatial relation activation/deactivation MAC CE in a wireless communication system to which the present disclosure may be applied.

FIG. 9 is a diagram illustrating an SRS path loss reference RS activation/deactivation MAC CE in a wireless communication system to which the present disclosure may be applied.

FIG. 10 is a diagram illustrating a PUSCH path loss reference RS activation/deactivation MAC CE in a wireless communication system to which the present disclosure may be applied.

FIG. 11 is a diagram illustrating PDSCH/PUSCH/PUCCH transmission based on MTRP PDCCH repetitive transmission.

FIG. 12 illustrates a signaling procedure between a network and a UE for an uplink transmission and reception method according to an embodiment of the present disclosure.

FIG. 13 is a diagram illustrating an operation of a UE for an uplink transmission and reception method according to an embodiment of the present disclosure.

FIG. 14 is a diagram illustrating an operation of a base station for a method for transmitting and receiving channel state information according to an embodiment of the present disclosure.

FIG. 15 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB (evolved-NodeB), a gNB (Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN (New Generation-Radio Access Network) overall description), TS 38.331(radio resource control protocol specification) may be referred to.

Abbreviations of terms which may be used in the present disclosure is defined as follows.

- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

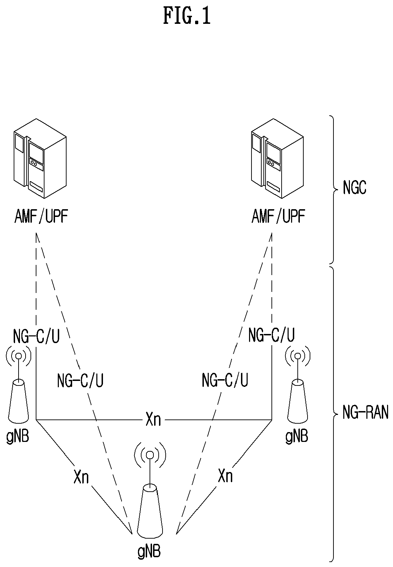

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

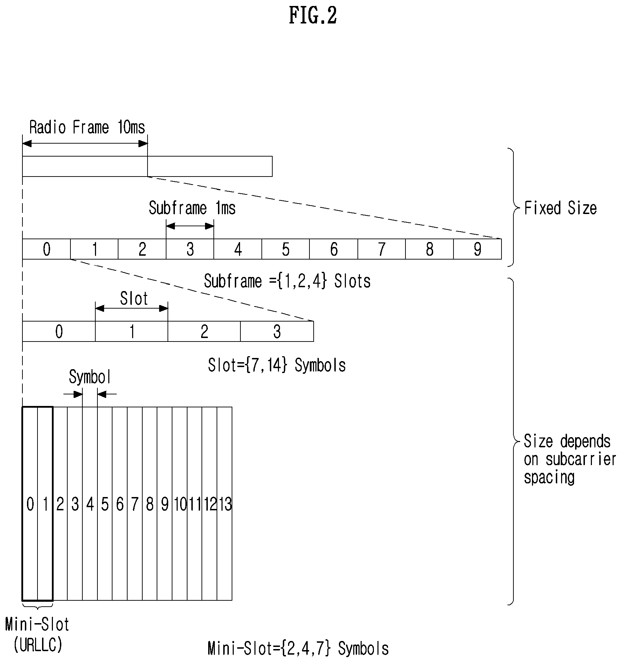

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f / 100) \cdot T_c = 10ms$. Here, a radio frame is configured with 10 subframes having a duration of $T_{sf} = (\Delta f_{max} N_f / 1000) \cdot T_c = 1ms$, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu}-1\}$ in a subframe and are numbered in an increasing order of $n_{s,f}^{\mu} \in \{0,..., N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

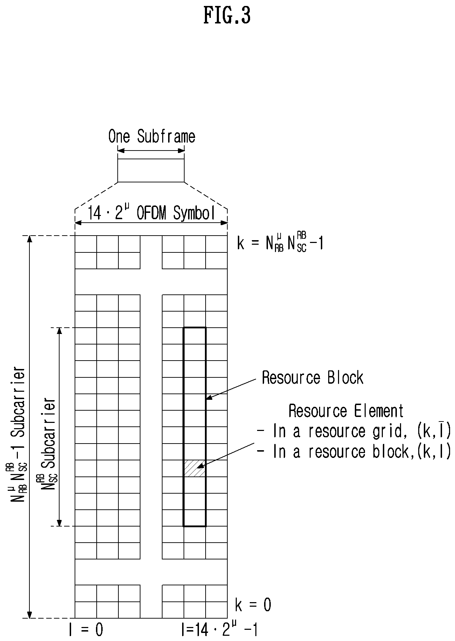

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k, l') . Here, k=0, ..., $N_{RB}^{\mu}N_{sc}^{RB}$-1 is an index in a frequency domain and l'=0,..., $2^{\mu}N_{symb}^{(\mu)}$-1 refers to a position of a symbol in a subframe. When referring to a resource element in a slot, an index pair (k,l) is used. Here, l=0,..., $N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequencyposition of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

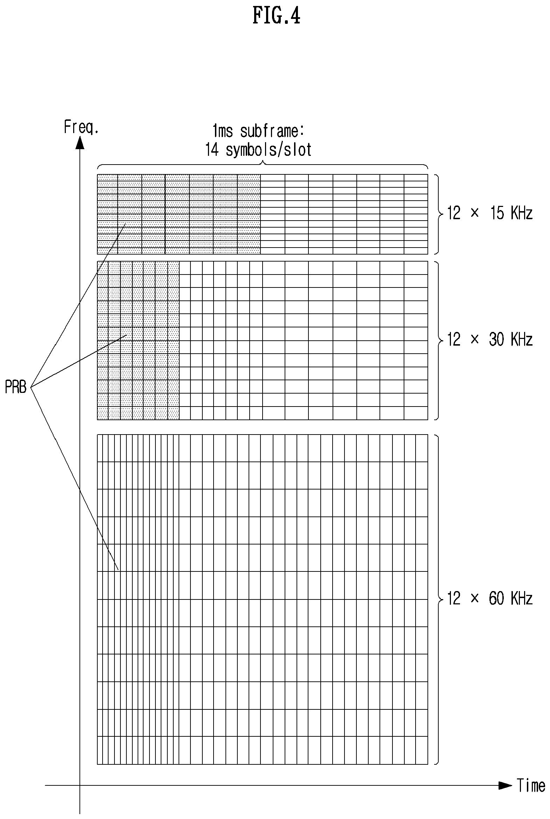

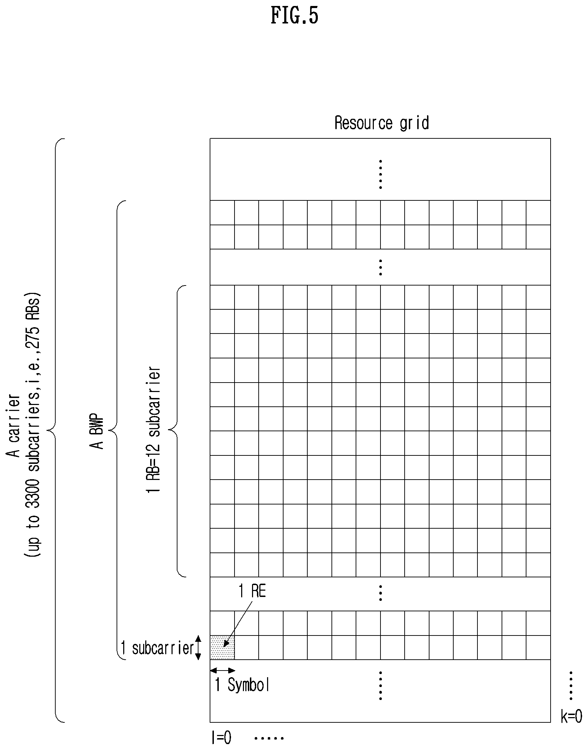

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

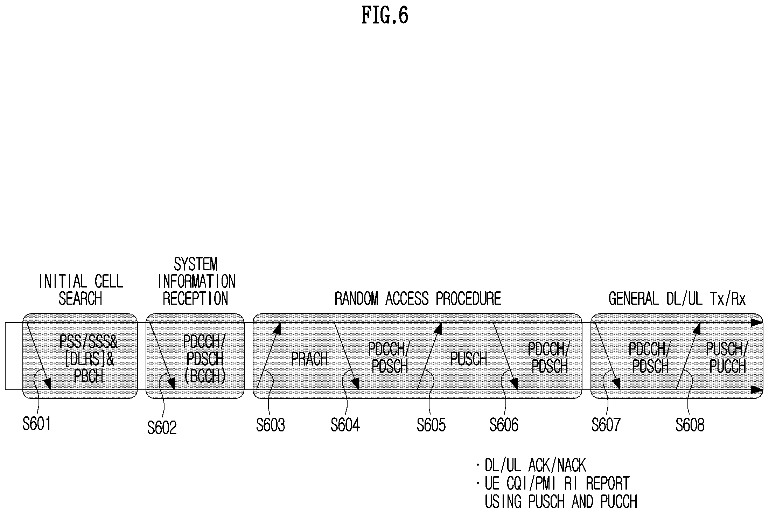

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL(quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A quasi co-location type corresponding to each DL RS is given by a higher layer parameter qcl-Type of QCL-Info and may take one of the following values.

- 'QCL-TypeA': (Doppler shift, Doppler spread, average delay, delay spread)
- 'QCL-TypeB': (Doppler shift, Doppler spread}
- 'QCL-TypeC': (Doppler shift, average delay}
- 'QCL-TypeD': (Spatial Rx parameter}

For example, when a target antenna port is a specific NZP CSI-RS, it may be indicated/configured that a corresponding NZP CSI-RS antenna port(s) is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

A UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter, ControlResourceSet information element (IE), is used to configure a time/frequency control resource set (CORESET). In an example, the control resource set (CORESET) may be related to detection and reception of downlink control information. The ControlResourceSet IE may include a CORESET-related ID (e.g., controlResourceSetID)/an index of a CORESET pool for a CORESET (e.g., CORESETPoolIndex)/a time/frequency resource configuration of a CORESET/TCI information related to a CORESET, etc. In an example, an index of a CORESET pool (e.g., CORESETPoolIndex) may be configured as 0 or 1. In the description, a CORESET group may correspond to a CORESET pool and a CORESET group ID may correspond to a CORESET pool index (e.g., CORESETPoolIndex) .

Hereinafter, a method for improving reliability in Multi-TRP will be described.

As a transmission and reception method for improving reliability using transmission in a plurality of TRPs, the following two methods may be considered.

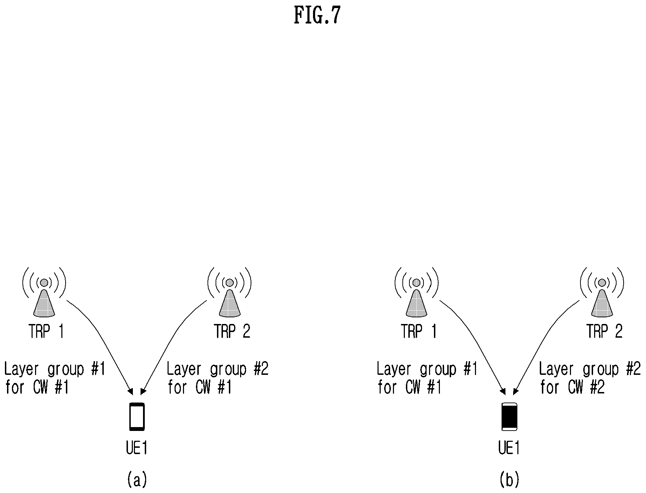

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 7(b), it may have a disadvantage that a code rate corresponding to a TB is higher compared to FIG. 7(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Multi-TRP scheduled by at least one DCI may be performed as follows:

i) Scheme 1 (SDM): n (n is a natural number) TCI states in a single slot in overlapping time and frequency resource allocation

- Scheme 1a: Each transmission occasion is one layer or set of layers of the same TB, and each layer or set of layers is associated with one TCI and one set of DMRS port(s). A single codeword with one redundancy version (RV) is used for all layers or sets of layers. For a UE, different coded bits are mapped to different layers or sets of layers with specific mapping rules.
- Scheme 1b: Each transmission occasion is one layer or set of layers of the same TB, and each layer or set of layers is associated with one TCI and one set of DMRS port(s). A single codeword with one RV is used for each spatial layer or set of layers. RVs corresponding to each spatial layer or set of layers may be the same or different.
- Scheme 1c: Each transmission occasion is one layer of the same TB having one DMRS port associated with multiple TCI state indices or one layer of the same TB with multiple DMRS ports associated with multiple TCI indices in turn (one by one).

In schemes 1a and 1c described above, the same MCS is applied to all layers or sets of layers.

ii) Scheme 2 (FDM): n (n is a natural number) TCI states in a single slot in non-overlapping frequency resource allocation. Each non-overlapping frequency resource allocation is associated with one TCI state. The same single/multiple DMRS port(s) is associated with all non-overlapping frequency resource allocations.

- Scheme 2a: A single codeword with one RV is used across an entire resource allocation. For UE, a common RB mapping (mapping of codeword to layer) is applied across all resource allocations.
- Scheme 2b: A single codeword with one RV is used for each non-overlapping frequency resource allocation. RVs corresponding to each non-overlapping frequency resource allocation may be the same or different.

In scheme 2a, the same MCS is applied to all non-overlapping frequency resource allocations.

iii) Scheme 3 (TDM): n (n is a natural number) TCI states in a single slot in non-overlapping time resource allocation. Each transmission occasion of a TB has one TCI and one RV with time granularity of a mini-slot. All transmission occasion(s) in a slot use a common MCS with the same single or multiple DMRS port(s). An RV/TCI state may be the same or different among transmission occasions.

iv) Scheme 4 (TDM): n (n is a natural number) TCI states in K (n<=K, K is a natural number) different slots. Each transmission occasion of a TB has one TCI and one RV. All transmission occasion(s) across K slots use a common MCS with the same single or multiple DMRS port(s). An RV / TCI state may be the same or different among transmission occasions.

Hereinafter, in the present disclosure, DL MTRP-URLLC means that M-TRPs transmit the same data(e.g., transport block, TB)/DCI by using a different layer/time/frequency resource. For example, TRP 1 transmits the same data/DCI in resource 1 and TRP 2 transmits the same data/DCI in resource 2. UE configured with a DL MTRP-URLLC transmission method receives the same data/DCI by using a different layer/time/frequency resource. Here, UE is indicated which QCL RS/type (i.e., a DL TCI (state)) should be used in a layer/time/frequency resource receiving the same data/DCI from a base station. For example, when the same data/DCI is received in resource 1 and resource 2, a DL TCI state used in resource 1 and a DL TCI state used in resource 2 may be indicated. UE may achieve high reliability because it receives the same data/DCI through resource 1 and resource 2. Such DL MTRP URLLC may be applied to a PDSCH/a PDCCH.

Conversely, UL MTRP-URLLC means that M-TRPs receive the same data/UCI from UE by using a different layer/time/frequency resource. For example, TRP 1 receives the same data/UCI from UE in resource 1 and TRP 2 receives the same data/UCI from UE in resource 2 and shares received data/UCI through a backhaul link connected between TRPs. UE configured with a UL MTRP-URLLC transmission method transmits the same data/UCI by using a different layer/time/frequency resource. Here, UE is indicated which Tx beam and which Tx power (i.e., a UL TCI state) should be used in a layer/time/frequency resource transmitting the same data/DCI from a base station. For example, when the same data/UCI is received in resource 1 and resource 2, a UL TCI state used in resource 1 and a UL TCI state used in resource 2 may be indicated. Such UL MTRP URLLC may be applied to a PUSCH/a PUCCH.

In addition, in methods proposed in the present disclosure, when a specific TCI state (or a TCI) is used (/mapped) in receiving data/DCI/UCI for any frequency/time/space resource, it may mean that a DL estimates a channel from a DMRS by using a QCL type and a QCL RS indicated by a corresponding TCI state in that frequency/time/space resource and receives/demodulates data/DCI to an estimated channel. It may mean that an UL transmits/modulates a DMRS and data/UCI by using a Tx beam and/or Tw power indicated by a corresponding TCI state in that frequency/time/space resource.

The UL TCI state has Tx beam and/or Tx power information of UE and spatial relation information, etc. instead of a TCI state may be configured to UE through other parameter. An UL TCI state may be directly indicated to UL grant DCI or may mean spatial relation information of an SRS resource indicated by an SRI (SRS resource indicator) field of UL grant DCI. Alternatively, it may mean an OL (open loop) Tx power control parameter connected to a value indicated by a SRI field of UL grant DCI (j: an index for open loop parameter Po and alpha($\alpha$) (up to 32 parameter value sets per cell), q_d: an index of a DL RS resource for PL (pathloss) measurement (measurement of up to 3 per cell), l: a closed loop power control process index (up to 2 processes per cell)).

On the other hand, it is assumed that MTRP-eMBB means that M-TRPs transmit other data by using a different layer/time/frequency, UE configured with a MTRP-eMBB transmission method is indicated multiple TCI states with DCI and data received by using a QCL RS of each TCI state is different data.

In addition, whether of MTRP URLLC transmission/reception or MTRP eMBB transmission/reception may be understood by UE by separately classifying a RNTI for MTRP-URLLC and a RNTI for MTRP-eMBB and using them. In other words, when CRC masking of DCI is performed by using a RNTI for URLLC, it is considered as URLLC transmission and when CRC masking of DCI is performed by using a RNTI for eMBB, it is considered as eMBB transmission. Alternatively, a base station may configure MTRP URLLC transmission/reception or may configure MTRP eMBB transmission/reception to UE through other new signaling.

In the present disclosure, for convenience of a description, a proposal is applied by assuming cooperative transmission/reception between 2 TRPs, but it may be extended and applied in 3 or more multi-TRP environments and it may be also extended and applied in multi-panel environments. A different TRP may be recognized by UE as a different transmission configuration indication (TCI) state. That is, when UE receives/transmits data/DCI/UCI by using TCI state 1, it means that data/DCI/UCI is received/transmitted from/to TRP 1.

A proposal of the present disclosure may be utilized in a situation where MTRP cooperatively transmits a PDCCH (the same PDCCH is repetitively or partitively transmitted) and some proposals may be utilized even in a situation where MTRP cooperatively transmits a PDSCH or cooperatively receives a PUSCH/a PUCCH.

In addition, in the present disclosure below, the meaning that a plurality of base stations (i.e., MTRP) repetitively transmits the same PDCCH may mean the same DCI is transmitted by a plurality of PDCCH candidates, and it is equivalent with the meaning that a plurality of base stations repetitively transmits the same DCI. The same DCI may mean two DCI with the same DCI format/size/payload. Alternatively, although two DCI have a different payload, it may be considered the same DCI when a scheduling result is the same. For example, a TDRA (time domain resource allocation) field of DCI relatively determines a slot/symbol position of data and a slot/symbol position of A/N(ACK/NACK) based on a reception time of DCI. Here, if DCI received at a time of n and DCI received at a time of n+1 represent the same scheduling result to UE, a TDRA field of two DCI is different, and consequentially, a DCI payload is different. R, the number of repetitions, may be directly indicated or mutually promised by a base station to UE. Alternatively, although a payload of two DCI is different and a scheduling result is not the same, it may be considered the same DCI when a scheduling result of one DCI is a subset of a scheduling result of other DCI. For example, when the same data is repetitively transmitted N times through TDM, DCI 1 received before first data indicates N data repetitions and DCI 2 received after first data and before second data indicates N-1 data repetitions. Scheduling data of DCI 2 becomes a subset of scheduling data of DCI 1 and two DCI is scheduling for the same data, so in this case, it may be considered the same DCI.

In addition, in the present disclosure below, when a plurality of base stations (i.e., MTRP) divide and transmit the same PDCCH, it may mean that one DCI is transmitted through one PDCCH candidate, but TRP 1 transmits some resources in which the PDCCH candidate is defined and TRP 2 transmits the remaining resources. For example, when TRP 1 and TRP 2 divide and transmit a PDCCH candidate corresponding to an aggregation level m1 + m2, the PDCCH candidate is divided into PDCCH candidate 1 corresponding to aggregation level m1 and PDCCH candidate 2 corresponding to aggregation level m2, and TRP 1 transmits the PDCCH candidate 1 and TRP 2 transmits the PDCCH candidate 2 using different time/frequency resources. After receiving the PDCCH candidate 1 and the PDCCH candidate 2, a UE generates a PDCCH candidate corresponding to aggregation level m1+m2 and attempts DCI decoding.

When the same DCI is divided and transmitted to several PDCCH candidates, there may be two implementation methods.

First, a DCI payload (control information bits + CRC) may be encoded through one channel encoder (e.g., a polar encoder), and coded bits obtained as a result may be divided into two TRPs and transmitted. In this case, an entire DCI payload may be encoded in coded bits transmitted by each TRP, or only a part of a DCI payload may be encoded. Second, a DCI payload (control information bits + CRC) may be divided into two (DCI 1 and DCI 2) and each may be encoded through a channel encoder (e.g., polar encoder). Thereafter, two TRPs may transmit coded bits corresponding to DCI 1 and coded bits corresponding to DCI 2, respectively.

In summary, it may be as follows that a plurality of base stations (i.e., MTRP) divide/repeat the same PDCCH and transmit over a plurality of monitoring occasions (MO).

i) it may mean that each base station (i.e., STRP) repeatedly transmits coded DCI bits obtained by encoding all DCI contents of a corresponding PDCCH through each MO; or,

ii) it may mean that coded DCI bits obtained by encoding all DCI contents of a corresponding PDCCH are divided into a plurality of parts, and each base station (i.e., STRP) transmits a different part through each MO; or

iii) it may mean that DCI contents of a corresponding PDCCH are divided into a plurality of parts, and each base station (i.e., STRP) separately encodes different parts and transmits them through each MO.

That is, it may be understood that a PDCCH is transmitted multiple times over several transmission occasions (TO) regardless of repeated transmission or divided transmission of the PDCCH. Here, a TO means a specific time/frequency resource unit in which a PDCCH is transmitted. For example, if a PDCCH is transmitted multiple times (in a specific resource block (RB)) over slots 1, 2, 3, and 4, a TO may mean each slot, or if a PDCCH is transmitted multiple times (in a specific slot) over RB sets 1, 2, 3, and 4, a TO may mean each RB set, or if a PDCCH is transmitted multiple times over different times and frequencies, a TO may mean each time/frequency resource. In addition, a TCI state used for DMRS channel estimation for each TO may be configured differently, and it may be assumed that TOs in which a TCI state is configured differently are transmitted by different TRPs/panels. When a plurality of base stations repeatedly transmits or dividedly transmits a PDCCH, it means that the PDCCH is transmitted over a plurality of TOs, and the union of TCI states configured in corresponding TOs is configured with two or more TCI states. For example, if a PDCCH is transmitted over TOs 1,2,3,4, TCI states 1,2,3,4 may be configured in each of TOs 1,2,3,4, respectively, which means that TRP i transmits cooperatively a PDCCH in TO i.

For a plurality of TOs indicated to a UE to repeatedly transmit or dividedly transmit a PDCCH/PDSCH/PUSCH/PUCCH, UL transmits to a specific TRP or DL receives from a specific TRP in each TO. Here, a UL TO (or TO of TRP 1) transmitted to TRP 1 means a TO using the first value among two spatial relations, two UL TCIs, two UL power control parameters and/or two pathloss reference signals (PLRS) indicated to a UE, and a UL TO (or TO of TRP 2) transmitted to TRP 2 means a TO using the second value among two spatial relations, two UL TCIs, two UL power control parameters and/or two PLRSs indicated to a UE. Similarly, for DL transmission, a DL TO (or TO of TRP 1) transmitted by TRP 1 means a TO using the first value among two DL TCI states (e.g., when two TCI states are configured in CORESET) indicated to a UE, and a DL TO (or TO of TRP 2) transmitted by TRP 2 means a TO using the second value among two DL TCI states (e.g., when two TCI states are configured in CORESET) indicated to a UE.

The proposal of the present disclosure can be extended and applied to various channels such as PUSCH/PUCCH/PDSCH/PDCCH.

The proposal of the present disclosure can be extended and applied to both a case of repeated transmission and a case of divided transmission the channel on different time/frequency/spatial resources.

<u>Uplink power control</u>

In a wireless communication system, it may be necessary to increase or decrease transmission power of a terminal (e.g., user equipment, UE) and/or a mobile device according to circumstances. Controlling transmission power of a UE and/or mobile device in this way may be referred to as uplink power control. As an example, a transmission power control method may be applied to satisfy requirements (e.g., Signal-to-Noise Ratio (SNR), Bit Error Ratio (BER), Block Error Ratio (BLER), etc.) in a base station (e.g., gNB, eNB, etc.).

Power control as described above may be performed using an open-loop power control method and a closed-loop power control method.

Specifically, an open-loop power control method refers to a method of controlling transmission power without feedback from a transmitting device (e.g., a base station, etc.) to a receiving device (e.g., a terminal, etc.) and/or from a receiving device to a transmitting device. For example, a UE may receive a specific channel/signal (pilot channel/signal) from a base station and estimate a strength of received power by using this. Thereafter, a UE can control transmit power using a strength of estimated received power.

In contrast, a closed-loop power control method refers to a method of controlling transmission power based on feedback from a transmitting device to a receiving device and/or feedback from a receiving device to a transmitting device. For example, a base station receives a specific channel/signal from a UE and determines an optimal power level of a UE based on a power level, SNR, BER, BLER, etc. measured by a received specific channel/signal. A base station transmits information (i.e., feedback) on a determined optimal power level to a UE through a control channel, etc., and a UE can control transmission power using feedback provided by a base station.

Hereinafter, for convenience of description, a power control method will be described based on a case in which a UE performs PUSCH transmission. Of course, the corresponding method can be extended and applied to other uplink data channels supported in the wireless communication system.

In the case of PUSCH transmission in an active uplink bandwidth part (UL BWP) of a carrier (f) of a serving cell (c), a UE may calculate a linear power value of transmission power determined by Equation 3 below. Thereafter, a UE may control transmission power by considering a calculated linear power value in consideration of a number of antenna ports and/or a number of SRS ports.

Specifically, when a UE performs PUSCH transmission in an activated UL BWP (b) of a carrier (f) of a serving cell (c) using parameter set configuration based on index j and PUSCH power control adjustment state based on index l, the UE may determine PUSCH transmission power $P_{PUSCH,b,f,c}(i,j,q_d,l)$(dBm) at a PUSCH transmission occasion (i) based on Equation 3 below.

Here, a transmission occasion (i) (i.e., unit of transmission time) may be determined by a slot index ($n\_s$) in a frame of a system frame number (SFN), the first symbol (S) in a slot, and a number of consecutive symbols (L), etc.

【Equation 3】

$$P_{\text{PUSCH}b,f,c}(i,j,q_d,l)=\min\begin{Bmatrix}P_{\text{CMAX}f,c}(i),\\P_{\text{O\_PUSCH}b,f,c}(j)+10\log_{10}(2^{\mu}\cdot M_{\text{RB}b,f,c}^{\text{PUSCH}}(i))+\alpha_{b,f,c}(j)\cdot PL_{b,f,c}(q_d)+\Delta_{\text{TF}b,f,c}(i)+f_{b,f,c}(i,l)\end{Bmatrix}$$

In Equation 3, index j represents an index for an open-loop power control parameter (e.g., $P_O$, alpha ($\alpha$), etc.), and up to 32 parameter sets may be configured per cell. Index q_d represents an index of a DL RS resource for PathLoss (PL) measurement (e.g., $PL_{b,f,c}(q_d)$), and up to 4 measurements can be configured per cell. Index l represents an index for a closed-loop power control process, and up to two processes can be configured per cell.

Specifically, a $P_O$ (e.g., $P_{O\_PUSCH,b,f,c}(j)$) is a parameter broadcast as a part of system information and may indicate target received power at a receiving side. A corresponding $P_O$ value may be configured in consideration of UE throughput, cell capacity, noise and/or interference, etc. In addition, alpha (e.g., $\alpha_{b,f,c}(j)$) may indicate a ratio for performing compensation for path loss. Alpha can be configured to a value from 0 to 1, and full pathloss compensation or fractional pathloss compensation can be performed according to the configured value. In this case, the alpha value may be configured in consideration of interference between UEs and/or data rate. In addition, $P_{CMAx,f,c}(i)$ may represent configured UE transmission power. For example, the configured UE transmission power may be interpreted as 'configured maximum UE output power' defined in 3GPP TS 38.101-1 and/or TS 38.101-2. In addition, $M_{RB,b,f,c}^{PUSCH}(i)$ is the bandwidth of PUSCH resource allocation represented by a number of resource blocks (RBs) for PUSCH transmission occasions based on subcarrier spacing ($\mu$) can be expressed. In addition, $f_{b,f,c}(i,l)$ related to a PUSCH power control adjustment state may be configured or indicated based on a TPC command field of DCI (e.g.: DCI format 0_0, DCI format 0_1, DCI format 2_2, DCI format2_3, etc.).

In this case, a specific radio resource control (RRC) parameter (e.g.: SRI-PUSCHPowerControl-Mapping, etc.) may indicate a linkage between an SRS Resource Indicator (SRI) field of downlink control information (DCI) and the indices j, q_d, and l. In other words, the indices j, l, q_d, etc. may be associated with a beam, a panel, and/or a spatial domain transmission filter, etc. based on specific information. Through this, PUSCH transmit power control can be performed in beam, panel, and/or spatial domain transmit filter units.

Parameters and/or information for PUSCH power control described above may be individually (i.e., independently) configured for each BWP. In this case, corresponding parameters and/or information may be configured or indicated through higher layer signaling (e.g., RRC signaling, medium access controlcontrol element (MAC-CE), etc.) and/or DCI. For example, parameters and/or information for PUSCH power control may be transmitted through RRC signaling PUSCH-ConfigCommon, PUSCHPowerControl, etc., and PUSCH-ConfigCommon and PUSCHPowerControl may be configured as shown in Table 6 below.

[00200]    【Table 6】

```
PUSCH-ConfigCommon ::=                 SEQUENCE {
     groupHoppingEnabledTransformPrecoding   ENUMERATED {enabled}
     pusch-TimeDomainAllocationList         PUSCH-TimeDomainResourceAllocationList
     msg3-DeltaPreamble                 INTEGER (-1..6)
     p0-NominalWithGrant                INTEGER (-202..24)
     ...
  }


PUSCH-PowerControl ::=              SEQUENCE {
     tpc-Accumulation               ENUMERATED { disabled }
     msg3-Alpha                     Alpha
     p0-NominalWithoutGrant         INTEGER (-202..24)
     p0-AlphaSets                       SEQUENCE (SIZE (1..maxNrofP0-PUSCH-AlphaSets)) OF P0-
PUSCH-AlphaSet
     pathlossReferenceRSToAddModList    SEQUENCE (SIZE (1..maxNrofPUSCH-PathlossReferenceRSs))
OF PUSCH-PathlossReferenceRS
     pathlossReferenceRSToReleaseList            SEQUENCE    (SIZE   (1..maxNrofPUSCH-
PathlossReferenceRSs)) OF PUSCH-PathlossReferenceRS-Id
     twoPUSCH-PC-AdjustmentStates    ENUMERATED {twoStates}
     deltaMCS                       ENUMERATED {enabled}
     sri-PUSCH-MappingToAddModList      SEQUENCE (SIZE (1..maxNrofSRI-PUSCH-Mappings)) OF SRI-
PUSCH-PowerControl
     sri-PUSCH-MappingToReleaseList     SEQUENCE (SIZE (1..maxNrofSRI-PUSCH-Mappings)) OF SRI-
PUSCH-PowerControlId
  }
```

Through the method described above, a UE may determine or calculate PUSCH transmit power, and may transmit a PUSCH using the determined or calculated PUSCH transmit power.

The above example relates to uplink power control for a PUSCH, and power control for a PUCCH, an SRS, and a PRACH may be performed in a similar, though not identical, manner.

sounding reference signal (SRS)

In Rel-15 NR, spatialRelationInfo may be utilized in order for a base station to indicate a transmission beam to be used when a UE transmits a UL channel. By configuring a DL reference signal (e.g., SSB-RI (SB Resource Indicator), CRI (CSI-RS Resource Indicator) (P/SP/AP: periodic/semi-persistent/aperiodic)) or an SRS (i.e., SRS resource) as a reference RS for a target UL channel and/or target RS through RRC configuration, a base station can indicate which UL transmission beam to use can when transmitting a PUCCH and an SRS. In addition, when a base station schedules a PUSCH to a UE, a transmission beam indicated by a base station and used for SRS transmission is indicated as a transmission beam for a PUSCH through an SRI field and is used as a PUSCH transmission beam of a UE.

Hereinafter, an SRS for codebook (CB) and noncodebook (NCB) will be described.

First, in a case of CB UL, a base station may first configure and/or indicated a UE to transmit an SRS resource configured for 'CB' purpose. And, a UE may transmit any n port SRS resource in a corresponding SRS resource set. A base station may receive a UL channel based on the corresponding SRS transmission and utilize it for PUSCH scheduling of a UE. Then, when a base station performs PUSCH scheduling through UL DCI, it can indicate a PUSCH (transmission) beam of a UE by indicating an SRS resource for a purpose of 'CB' previously transmitted by the UE through an SRI field of the DCI. In addition, a base station may indicate a UL rank and a UL precoder by indicating an uplink codebook through a transmitted precoder matrix indicator (TPMI) field. Through this, a UE can perform PUSCH transmission according to a corresponding indication.

Next, even in a case of NCB UL, a base station may first configure and/or indicate a UE to transmit an SRS resource set for a 'non-CB' purpose. And, based on reception of an NZP CSI-RS connected to a corresponding SRS resource set, a UE may determine a precoder of SRS resources (maximum 4 resources, 1 port per resource) in the corresponding SRS resource set and simultaneously transmit the corresponding SRS resources. Then, when a base station performs PUSCH scheduling through UL DCI, the base station may indicate a PUSCH (transmission) beam of a UE by indicating some of SRS resources for 'non-CB' purposes previously transmitted by a UE through an SRI field of the DCI, and may also indicate a UL rank and a UL precoder. Through this, a UE can perform PUSCH transmission according to the corresponding indication.

Hereinafter, an SRS for beam management will be described.

An SRS may be utilized for beam management. Specifically, UL BM may be performed through beamformed UL SRS transmission. Whether or not UL BM of an SRS resource set is applied is configured by (higher layer parameter) 'usage'. When usage is configured to 'BeamManagement (BM)', only one SRS resource can be transmitted to each of a plurality of SRS resource sets in a given time instant. A UE may be configured with one or more sounding reference symbol (SRS) resource sets configured by (higher layer parameter) 'SRS-ResourceSet' (through higher layer signaling, e.g., RRC signaling, etc.). For each SRS resource set, a UE may be configured with K≥1 SRS resources (higher layer parameter 'SRS-resource'). Here, K is a natural number, and the maximum value of K is indicated by SRS_capability.

Hereinafter, an SRS for antenna switching will be described.

An SRS may be used for acquisition of DL channel state information (CSI) information (e.g., DL CSI acquisition). As a specific example, in a single cell or multi-cell (e.g., carrier aggregation (CA)) situation based on TDD, after a base station (BS) schedules SRS transmission to a user equipment (UE), it can measure an SRS from the UE. In this case, a base station may perform scheduling of a DL signal/channel to a UE based on measurement by an SRS, assuming DL/UL reciprocity. In this case, in relation to DL CSI acquisition based on an SRS, an SRS may be configured for antenna switching.

As an example, when conforming to the standard (e.g., 3gpp TS 38.214), a purpose of an SRS may be configured to a base station and/or a UE using a higher layer parameter (e.g., usage of RRC parameter SRS-ResourceSet). Here, a purpose of an SRS may be configured to beam management, codebook transmission, noncodebook transmission, antenna switching, etc.

Pathloss (PL) reference signal (RS) update method

In NR MIMO Rel-15, a base station may configure a DL RS (i.e., pathloss reference RS, or pathloss RS or PL RS for short) by using an open loop power control parameter for pathloss compensation in an uplink (UL channel)/RS (e.g., PUSCH, PUCCH, SRS) of a UE. In addition, only for a PUCCH, the pathloss RS can be updated by updating a PUCCH spatial relation information identifier (PUCCH-SpatialRelationInfoId) through a MAC control element (CE) message for each PUCCH resource.

Hereinafter, a PUCCH spatial relation activation/deactivation MAC CE will be described in detail.

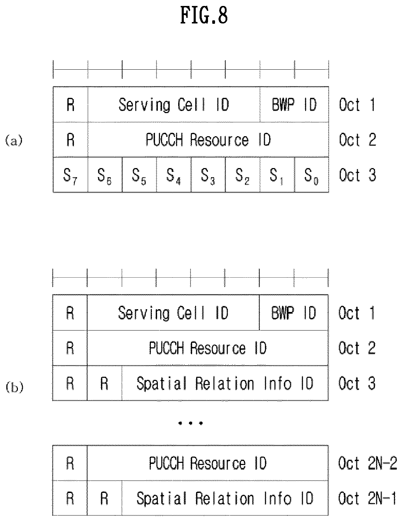

FIG. 8 is a diagram illustrating a PUCCH spatial relation activation/deactivation MAC CE in a wireless communication system to which the present disclosure may be applied.

Referring to FIG. 8(a), a PUCCH spatial relation activation/deactivation MAC CE is identified by a MAC subheader having a logical channel identifier (LCID). In addition, a PUCCH spatial relation activation/deactivation MAC CE has a fixed size of 24 bits with the following fields.

- Serving Cell ID: This field indicates an identity of a serving cell for which the MAC CE applies. A length of the field is 5 bits;
- BWP ID: This field indicates a UL BWP for which the MAC CE applies as a codepoint of a DCI bandwidth part indicator field. A length of the BWP ID field is 2 bits;
- PUCCH Resource ID: This field contains an identifier of a PUCCH resource ID identified by PUCCH-ResourceId. A length of the field is 7 bits;
- Si: If there is a PUCCH Spatial Relation Info with PUCCH-SpatialRelationInfoId, configured for an uplink bandwidth part indicated by BWP ID field, Si indicates an activation status of PUCCH Spatial Relation Info with PUCCH-SpatialRelationInfoId equal to i + 1, otherwise MAC entity shall ignore this field. The Si field is set to 1 to indicate PUCCH Spatial Relation Info with PUCCH-SpatialRelationInfoId equal to i + 1 shall be activated. An Si field is configured to 0 to indicate activation of PUCCH Spatial Relation Info with PUCCH-SpatialRelationInfoId equal to i + 1 shall be deactivated. Only a single PUCCH Spatial Relation Info can be active for a PUCCH Resource at a time;
- R: Reserved bit, set to 0.

FIG. 8(b) is a diagram illustrating an enhanced PUCCH spatial relation activation/deactivation MAC CE in a wireless communication system to which the present disclosure may be applied.

Referring to FIG. 8(b), an enhanced PUCCH spatial relation activation/deactivation MAC CE is identified by a MAC subheader having an enhanced LCID (eLCID). In addition, an Enhanced PUCCH Spatial Relation Activation/Deactivation MAC CE has a variable size with the following fields.

- Serving Cell ID: This field indicates an identity of a Serving Cell for which the MAC CE applies. A length of the field is 5 bits;
- BWP ID: This field indicates a UL BWP for which the MAC CE applies as a codepoint of a DCI bandwidth part indicator field. A length of the BWP ID field is 2 bits;
- PUCCH Resource ID: This field contains an identifier of a PUCCH resource ID identified by PUCCH-ResourceId, which is to be activated with a spatial relation indicated by Spatial Relation Info ID field in a subsequent octet. A length of the field is 7 bits. If an indicated PUCCH Resource is configured as part of a PUCCH Resource Group and no other PUCCH resources within the same PUCCH Resource group are indicated in the MAC CE, and this MAC CE applies to all the PUCCH Resources in the PUCCH Resource group;

- Spatial Relation Info ID: This field contains PUCCH-SpatialRelationInfoId - 1 where PUCCH-SpatialRelationInfoId is an identifier of the PUCCH Spatial Relation Info in PUCCH-Config in which the PUCCH Resource ID is configured. The length of the field is 6 bits;
- R: Reserved bit, set to 0

After that, in Rel-16 eNR MIMO, standardization has been progressed so that a pathloss RS can also be updated for a PUSCH and an SRS through individual MAC CE messages. In addition, standardization has been carried out to increase a number of pathloss RS pools from 8 to 64, which can be configured by RRC signaling. This will be described in detail.

i) A Pathloss reference RS for a PUSCH can be activated/updated via a MAC CE.

The MAC CE message can activate/update a value of PUSCH-PathlossReferenceRS-Id corresponding to sri-PUSCH-PowerControlId.
In TS 38.331, a mapping is given by SRI-PUSCH-PowerControl, in which a linkage is between sri-PUSCH-PowerControlId and PUSCH-PathlossReferenceRS-Id.
Reuse higher layer filtered RSRP for pathloss measurement, with defining an applicable timing after the MAC CE.
Filtered RSRP value for previous pathloss RS will be used before an application time (the next slot 2 ms after Nth measurement sample), where the 1st measurement sample corresponds to be the 1st instance (3ms after sending an ACK for a MAC CE).
This is only applicable for UEs supporting the number of RRC-configurable pathloss RSs larger than 4, and this is only for the case that the activated PL RS by the MAC CE is not tracked.
A UE is only required to track activated PL RS(s) if the configured PL RSs by RRC is greater than 4.
It is up to a UE whether to update the filtered RSRP value for previous PL RS 3ms after sending an ACK for the MAC CE.
Here, a value of N may be determined in consideration of characteristics of a UE, and for example, a fixed value of N=5 may be applied.
ii) A pathloss reference RS for an aperiodic (AP)-SRS/semi-persistent (SP)-SRS can be activated/updated via a MAC CE.

- A UE can be configured with multiple pathloss RSs by RRC and one of them can be activated/updated via the MAC CE for a SRS resource set.
- Reuse higher layer filtered RSRP for pathloss measurement, with defining an applicable timing after the MAC CE.

Filtered RSRP value for previous pathloss RS will be used before an application time (the next slot 2 ms after Nth measurement sample), where the 1st measurement sample corresponds to be the 1st instance (3ms after sending an ACK for the MAC CE).
This is only applicable for UEs supporting the number of RRC-configurable pathloss RSs larger than 4, and this is only for the case that an activated PL RS by the MAC CE is not tracked.
A UE is only required to track an activated PL RS if the configured PL RSs by RRC is greater than 4.
It is up to a UE whether to update the filtered RSRP value for previous PL RS 3ms after sending an ACK for the MAC CE.
Here, a value of N may be determined in consideration of characteristics of a UE, and for example, a fixed value of N=5 may be applied.
iii) On power control for a PUSCH, a PUCCH, and an SRS, the total number of maximum configurable pathloss RSs by RRC is 64.
Such pathloss reference signals are for configuration purpose only, and a UE is still only required to track up to 4 pathloss RSs for any PUSCH, PUCCH, and SRS transmissions.
"Up to 4 pathloss RSs" applies the total number of pathloss RSs for a PUSCH, a PUCCH, and an SRS.
iv) For MAC CE based pathloss RS updates for a PUSCH/SRS, introduce one new RRC parameter to enable the MAC CE based pathloss RS updates for the PUSCH/SRS.
v) When the RRC parameter enablePLRSupdateForPUSCHSRS is configured, it is as follows.
If a grant-based or grant-free PUSCH transmission is scheduled/activated by DCI format 0_1 that does not include a SRS resource indicator (SRI) field, an RS resource index qd corresponding to the PUSCH-PathlossReferenceRS-Id mapped with sri-PUSCH-PowerControlId = 0 is used for path-loss measurement of PUSCH transmission. In this case, a UE expects to be configured with sri-PUSCH-PowerControl.

vi) An application timing for the newly activated PL RSs is the next slot that is 2ms after the N-th measurement sample, where the 1st measurement sample corresponds to be the 1st instance, 3ms after sending ACK for the MAC CE.

Here, a value of N may be determined in consideration of characteristics of a UE, and for example, a fixed value of N=5 may be applied.

The application timing is applied to a PUSCH, an AP/SP-SRS and a PUCCH.

vii) When the number of RRC configured PL RSs for pathloss estimates for a PUCCH, a PUSCH and an SRS is greater than 4, a UE is not required to track the RSs which are not activated by a MAC-CE.

In this regard, a configuration according to whether a default PL RS is enabled may be required.

If MAC-CE based PL RS activation/update is not enabled, a UE is not expected to be configured with more than 4 PL RS.

viii) When a default PL RS is applied, a UE expects to be configured with a periodic RS as a QCL-TypeD RS for the default pathloss RS.

Hereinafter, a default pathloss reference RS for a PUSCH/SRS will be described.

i) When a PL RS for an SRS is not configured, the following operation may be performed.

When a CORESET is not configured and at least 1 active TCI state is configured for a PDSCH, a PL RS for an SRS is the QCL-TypeD RS of the active TCI state of the lowest ID for the PDSCH. Here, the PL RS may be a periodic RS.

When a CORESET is not configured and absence of active TCI state on a CC for a PDSCH, it can follow existing behavior.

ii) A default spatial relation and default pathloss RS of a PUSCH scheduled by DCI format 0_0 may be supported when there is no PUCCH resources configured on an active UL BWP CC in FR2 and in RRC-connected mode, for UEs supporting a feature of a default spatial relation for a dedicated-PUSCH.

The default spatial relation is a TCI state/QCL assumption of a CORESET with the lowest ID.

The default pathloss RS is the QCL-TypeD RS of the same TCI state/QCL assumption of a CORESET with the lowest ID. Here, the PL RS may be a periodic RS.

iii) In supporting to schedule a PUSCH by DCI format 0_0 on the CC in FR2 and in RRC-connected mode with PUCCH resource(s) configured, when all the configured PUCCH resource(s) are not configured with any spatial relation, the spatial relation and the PL RS for a PUSCH scheduled by DCI format 0_0 follow those for the PUCCH resource(s), which are the default spatial relation and the default pathloss RS, respectively.

iv) For enabling UE behaviors on the default spatial relation and pathloss RS, new RRC parameters, such as the parameter enableDefaultBeamPlForPUSCH0_0 for PUSCH scheduled by DCI format 0_0, the parameter enable-DefaultBeamPlForPUCCH for dedicated PUCCH, the parameter enableDefaultBeamPlForSRS for dedicated SRS to enable the default spatial relation and PL RS behaviors may be introduced.

Hereinafter, the SRS pathloss reference RS activation/deactivation MAC CE will be described in detail.

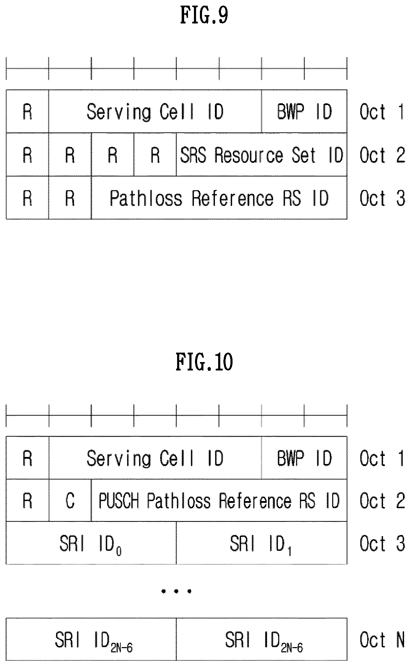

FIG. 9 is a diagram illustrating an SRS path loss reference RS activation/deactivation MAC CE in a wireless communication system to which the present disclosure may be applied.

Referring to FIG. 9, the SRS Pathloss Reference RS Activation/Deactivation MAC CE is identified by a MAC subheader with LCID. In addition, the SRS Pathloss Reference RS Activation/Deactivation MAC CE has a fixed size of 24 bits with the following fields:

- Serving Cell ID: This field indicates an identity of a Serving Cell, which contains an activated SRS Resource Set. A length of the field is 5 bits;
- BWP ID: This field indicates a UL BWP as a codepoint of a DCI bandwidth part indicator field, which contains activated SRS Resource Set. A length of the field is 2 bits;
- SRS Resource Set ID: This field indicates an SRS Resource Set ID identified by SRS-ResourceSetId. A length of the field is 4 bits;
- Pathloss reference RS ID: This field indicates an SRS Resource Set ID identified by pathlossReferenceRS. A length of the field is 6 bits;
- R: Reserved bit, set to 0.

Hereinafter, the PUSCH Pathloss Reference RS Activation/Deactivation MAC CE will be described in detail.

FIG. 10 is a diagram illustrating a PUSCH path loss reference RS activation/deactivation MAC CE in a wireless communication system to which the present disclosure may be applied.

Referring to FIG. 10, the PUSCH Pathloss Reference RS Activation/Deactivation MAC CE is identified by a MAC subheader with eLCID. In addition, the PUSCH Pathloss Reference RS Activation/Deactivation MAC CE has a variable size with the following fields:

- Serving Cell ID: This field indicates an identity of a Serving Cell, which contains activated/deactivated SRS Resource Set. A length of the field is 5 bits;
- BWP ID: This field indicates a UL BWP as a codepoint of a DCI bandwidth part indicator field, which contains an activated/deactivated SRS Resource Set. A length of the field is 2 bits;
- PUSCH Pathloss Reference RS ID: This field indicates a PUSCH Pathloss Reference RS ID identified by PUSCH-PathlossReferenceRS-Id, and this PUSCH path loss reference RS is updated within SRI PUSCH power control mappings indicated by an SRI ID field indicated within the same MAC CE. A length of this field is 6 bits;
- C: This field indicates the presence of an additional SRI ID in the last octet of this MAC CE. If this field is set to 1, two SRI ID(s) are present in the last octet. Otherwise, only one SRI ID (i.e., the first SRI ID) is present in the last octet;
- SRI (SRS Resource Indicator) Identifier (SRI ID): This field indicates an SRI PUSCH Power Control Identifier (ID) identified by sri-PUSCH-PowerControlId. A length of this field is 4 bits;
- R: Reserved bit, set to 0.

In addition, in order to reduce overhead in UL beam configuration/indication of a UE, in transmission beams (i.e., spatialRelationInfo) for a dedicated-PUCCH, a dedicated-SRS, and a PUSCH (PUSCH scheduled by DCI format 0_0), a default spatial relation (or default beam), which is an operation of associating an uplink beam RS with a downlink beam RS, may be defined.

When a spatial relation of a PUCCH/SRS is not configured in FR2, the spatial relation of the PUCCH/SRS may follow a TCI-state/QCL of a PDCCH/CSI-RS/SSB.

i) For at least for a UE supporting beam correspondence, if spatial relation information is not configured for a dedicated-PUCCH/SRS (except for an SRS for beam management) in FR2, a default spatial relation for a dedicated-PUCCH/SRS may be applied.

ii) A default spatial relation applied to a dedicated-PUCCH/SRS in i) may be selected from the following examples. In addition, the following examples may be applied to a UE that supports beam correspondence as well as a UE that does not support it.

- A default TCI state or QCL assumption of a PDSCH (e.g., related to most recent slot and lowest CORESET ID);
- One of the activated TCI states of a CORESET
- A TCI state of a PDCCH scheduling an A-SRS/PUCCH, and a TCI state or QCL assumption of PDSCHs other than an A-SRS/PUCCH;
- A QCL assumption for CORESET#0
- A pathloss reference RS

iii) A default spatial relation may not be applied to SRS resource(s) configured in an SRS resource set for nonCodebook use in which an associated CSI-RS is configured.

That is, the above i) can be re-expressed as follows. For at least for a UE supporting beam correspondence, if spatial relation information is not configured for a dedicated-PUCCH/SRS (except for an SRS for beam management use and an SRS for nonCodebook use in which associatedCSI-RS is configured) in FR2, a default spatial relation for the dedicated-PUCCH/SRS may be applied.

iv) When a pathloss RS is not configured by at least RRC, a default spatial relation for a dedicated-PUCCH/SRS may be determined as follows.

- When CORESET (s) are configured on a CC, a TCI state/QCL assumption of a CORESET with the lowest ID (PL RS to be used is QCL-TypeD RS of the same TCI state/QCL assumption of CORESET with lowest ID, and PL RS may be periodic RS), or
- When a CORESET is not configured on a CC, an activated TCI state having the lowest ID applicable to a PDSCH in an activated DL-BWP of the CC.
- This can be applied at least for a UE with beam correspondence.
- This may apply to at least a single TRP case.

Uplink transmission based on default spatial relation/path loss reference signal update

The present disclosure describes various examples in which a base station configures/updates a default spatial relation (or default beam) and/or default pathloss RS (PL RS) for uplink transmission and reception (e.g., uplink channel and/or uplink RS) for a UE. In addition, based on the configuration/update of the default spatial relation/PL RS for uplink transmission and reception, various examples in which a UE performs uplink transmission (e.g., uplink channel/RS transmission) will be described.

In the following example, the term "spatial parameter" may mean a parameter related to beam transmission/reception referred to for downlink reception or uplink transmission of a UE.

For example, a spatial parameter related to downlink transmission/reception may include QCL information applied to a physical channel through which downlink control information or data is transmitted/received or assumed by a UE. QCL information may include QCL RS information, and QCL RS information may be configured for each QCL type (e.g., QCL type A/B/C/D). For example, downlink control information (DCI) may be transmitted and received through a PDCCH, and a spatial parameter related to DCI transmission/reception may include QCL reference information for PDCCH DMRS antenna port(s), TCI state information, etc. In addition, downlink data may be transmitted and received through a PDSCH, and a spatial parameter related to downlink data transmission/reception may include QCL reference information for PDSCH DMRS antenna port(s), TCI state information, etc.

However, in the present disclosure, the term spatial parameter is not limited to QCL information, and it may include a spatial parameter applied to uplink transmission (e.g., spatial relation information related to an uplink transmission beam). For example, uplink control information (UCI) may be transmitted and received through a PUCCH and/or a PUSCH, and a spatial parameter related to UCI transmission/reception may include PUCCH resource indicator (PRI) related to PUCCH/PUSCH transmission/reception, spatial relation info, or QCL reference RS related thereto, etc.

In addition, a spatial parameter may be configured separately for downlink or uplink, or collectively configured for downlink and uplink.

A spatial parameter may also be defined or configured as a spatial parameter set comprising one or more spatial parameters. Hereinafter, in order to simplify the description, one or more spatial parameters are collectively referred to as a spatial parameter.

In the following description, the term spatial parameter for uplink transmission may be substituted with various terms such as an uplink TCI state, an uplink spatial relation, an uplink transmission beam, an uplink beam, etc., and in some examples, it may be described using these terms instead of a spatial parameter. In addition, among spatial parameters for uplink transmission, what is configured as default is referred to as a default spatial parameter, and this may be substituted with terms such as a default spatial relation, a default transmission beam, a default beam, a default TCI state, etc., and in some examples, it may be described using these terms instead of a default spatial parameter.

In the following description, uplink transmission may include transmission of various uplink channels or uplink signals. For example, uplink transmission may correspond to PUSCH/PUCCH/SRS transmission, but is not limited thereto, and examples of the present disclosure may be applied to various uplink transmissions other than a PUSCH/PUCCH/SRS.

Hereinafter, examples of the present disclosure related to a default spatial parameter (e.g., spatial relation information)/default PL RS for uplink transmission will be described.

First, an uplink transmission operation for an existing single-panel UE and a single TRP that do not consider one or more of multi-panel UEs or multiple TRPs is summarized as follows.

A base station may configure a DL RS (i.e., PL RS) as an open loop power control parameter for pathloss compensation for uplink transmission of a UE. For a PUCCH, the PL RS may be updated by updating a spatial parameter identifier (e.g., PUCCH-SpatialRelationInfoId) through a MAC CE message for each PUCCH resource. In addition, a method of updating a PL RS for a PUSCH and an SRS through individual MAC CE messages may be applied. In addition, in order to increase efficiency through simplification of a UE operation, for a spatial parameter (e.g., transmit beam, or spatialRelationInfo) applied to a dedicated-PUCCH, a dedicated-SRS, and a PUSCH (e.g., PUSCH scheduled by DCI format 0_0), a default spatial parameter (or default beam) may be defined. Furthermore, a default PL RS may also be defined.

Additionally, to reduce an overhead of beam management for a dedicated-PUCCH and a dedicated-SRS, a 'default PL RS' based operation in which a PL RS for uplink is determined by a spatial parameter (e.g., DL beam or DL RS) information for a PDCCH or a PDSCH may be defined. In addition, a base station may configure whether to enable a default PL RS-based operation in a UE.

For example, a condition in which a default PL RS is enabled for a (dedicated-) PUCCH/SRS corresponds to a case where a default beam enable parameter (e.g., enableDefaultBeamPlForPUCCH for PUCCH, enableDefaultBeamPlForSRS for SRS), which is an RRC parameter, is configured in a state where a spatial parameter (e.g., spatial relation info) and s PL RS are not explicitly configured for the corresponding PUCCH/SRS. In this case, when a CORESET is configured in an activated BWP of a corresponding DL CC, a UE may configure a QCL Type-D RS (i.e., DL beam RS) corresponding to the lowest CORESET ID as a (default) PL RS, and when no CORESET is configured in the corresponding DL BWP, the UE may configured a QCL Type-D RS indicated by a TCI state corresponding to the lowest ID among TCI states for an activated PDSCH as a (default) PL RS. If there is a PUCCH in a UL CC/BWP, at least one CORESET exists in a corresponding DL CC/BWP, for PUCCH, a QCL Type-D RS corresponding to the lowest CORESET ID can be configured as a (default) PL RS. If a PUCCH exists in a UL CC/BWP, there is no case where a CORESET is not configured, therefore a (default) PL RS configuration for it is undefined.

In the case of a PUSCH, a default PL RS may be applied to a PUSCH scheduled by fallback DCI (e.g., DCI format 0_0). In a state where there is no PUCCH configured in a corresponding UL BWP (e.g., SCell UL) or a spatial parameter (e.g., spatial relation) for a PUCCH is not configured even if the PUCCH is configured, when a default beam enable parameter (e.g., enableDefaultBeamPlEorPUSCH0_0 for PUSCH), which is an RRC parameter, is configured, a default PL RS operation may be performed. In this case, a UE may configured a QCL Type-D RS corresponding to the lowest CORESET ID of a DL CC/BWP in which a PUSCH is scheduled (or DCI is monitored) as a (default) PL RS.

Additionally, in order to reduce overhead for UL beam configuration/instruction for a UE, in spatial parameters (i.e., transmit beam or spatialRelationInfo) for a dedicated-PUCCH, a dedicated-SRS, and a PUSCH (e.g., PUSCH scheduled by DCI format 0_0), a 'default spatial relation (or default beam or default spatial parameter)'-based operation of associating a UL beam RS with a DL beam RS may be applied.

For example, for an SRS configuration other than an SRS for a specific purpose (e.g., SRS for beam management, SRS for nonCodebook (when associatedCSI-RS configuration is applied)), in a state where a spatial parameter (e.g., spatial relation) and a PL RS are not explicitly configured for a corresponding PUCCH/SRS, a default beam enable parameter (e.g., enableDefaultBeamPlForPUCCH for PUCCH and enableDefaultBeamPlForSRS for SRS), which is an RRC parameter, may be configured. In this case, when a CORESET is configured in an activated BWP of a corresponding DL CC, a UE may configure a QCL Type-D RS (i.e., DL beam RS) corresponding to the lowest CORESET ID or a TCI state/QCL assumption of the corresponding CORESET as a default spatial parameter (or default spatial relation), and when no CORESET is configured in a corresponding DL BWP, a UE may configure a QCL Type-D RS indicated by a TCI state corresponding to the lowest ID among TCI states for an activated PDSCH or a corresponding TCI state/QCL assumption as a default spatial parameter. If there is a PUCCH in a UL CC/BWP, since at least one CORESET exists in the corresponding DL CC/BWP, for a PUCCH, a QCL Type-D RS corresponding to the lowest CORESET ID or a TCI state/QCL assumption of a corresponding CORESET may be configured as a default spatial parameter. When a PUCCH exists in a UL CC/BWP, there is no case where a CORESET is not configured, therefore a default spatial parameter configuration for this is not defined.

In the case of a PUSCH, a default spatial parameter (or default spatial relation) may be applied to a PUSCH scheduled by fallback DCI (e.g., DCI format 0_0). In a state where there is no PUCCH configured in a corresponding UL BWP (e.g., SCell UL) or a spatial parameter (e.g., spatial relation) for a PUCCH is not configured even if the PUCCH is configured, when a default beam enable parameter (e.g., enableDefaultBeamPlEorPUSCH0_0 for PUSCH), which is an RRC parameter, is configured, a default spatial parameter operation may be performed. In this case, a UE may configure ae TCI state/QCL assumption corresponding to the lowest CORESET ID of a DL CC/BWP in which a PUSCH is scheduled (or DCI is monitored) as a default spatial parameter.

As an additional example, for multi-TRP (MTRP) PDSCH transmission and reception, a single DCI-based operation and a multi-DCI-based operation may be defined. In addition, MTRP transmission and reception may be defined for various uplink/downlink transmission and reception (e.g., PDCCH, PUCCH, PUSCH, etc.) in addition to a PDSCH.

For example, for MTRP uplink transmission (e.g., PUCCH/PUSCH), a transmission ocassion (TO) corresponding to each TRP may be configured/defined. Before configuring/indicating each TO and scheduling/triggering uplink transmission in a corresponding TO, a transmission scheme applied to each TO may be configured to a UE by a base station. For example, in the case of MTRP PUSCH transmission, single DCI-based scheduling or multiple DCI-based scheduling may be applied, and prior to such scheduling (or together with scheduling), a timing advance (TA), a transmission rank, PUSCH DMRS port(s), a TPMI, an MCS, a (open loop (OL)/closed loop (CL)) power control parameter set, a transmission beam (or spatial relation or spatial parameter), a transmission panel, etc. may be configured/indicated.

The above definition of a default spatial parameter and a default PL RS does not consider either uplink transmission of a multi-panel UE or uplink transmission of multiple TRPs. In order to support a default spatial parameter/default PL RS-based operation for multi-panel terminals, a default spatial parameter/default PL RS needs to be defined for each panel. In order to support a default spatial parameter/default PL RS-based operation for a multi-panel UE, a default spatial parameter/default PL RS needs to be defined for each panel. In addition, considering transmission/reception from/to the MTRP, transmission/reception beams/panels may be different for each TRP and/or for each TO. Therefore, in order to support one or more of uplink transmission of multi-panel terminals or uplink transmission of multiple TRPs, a default spatial parameter/default PL RS needs to be defined for each panel/TRP/TO.

Therefore, in the present disclosure, specific embodiments in which a base station configures/updates a default spatial parameter and/or a default PL RS for uplink transmission to a UE, and embodiments in which a UE performs uplink transmission based on this will be described.

Embodiment 1

This embodiment relates to a default spatial parameter/default PL RS configuration method for each (transmission) panel for specific uplink transmission of a multi-panel UE. In addition, a configuration/assumption of a UE for a default spatial parameter/default PL RS may be different for transmission for an STRP and transmission for MTRP.

Embodiment 1-1

This embodiment relates to a default spatial parameter/default PL RS applied to uplink transmission of a multi-panel UE to an STRP. Although this embodiment is described based on a multi-panel UE, it may also be applied to a single-panel UE.

When a specific uplink transmission (e.g., dedicated-PUCCH, dedicated-SRS, PUSCH (e.g., PUSCH scheduled by fallback DCI (e.g., DCI format 0_0) that does not include spatial parameter indication information)) of a multi-panel UE is for STRP transmission, the UE may configure/assume a default spatial parameter and a default PL RS of the corresponding uplink transmission as the same spatial parameter and the same PL RS for all (transmission) panels.

For example, for a PUCCH/SRS, based on a TCI state/QCL Type-D RS of a CORESET with the lowest ID among the CORESET(s) configured in an activated CC/BWP, or based on a TCI state of the lowest ID among TCI states for PDSCH use (activated through MAC CE) when a CORESET is not configured in an activated CC/BWP, the one spatial parameter/one PL RS can be determined. For a PUSCH, the one spatial parameter/one PL RS may be determined based on a TCI state/QCL Type-D RS of a CORESET of the lowest ID of a DL CC/BWP through which PUSCH scheduling DCI is transmitted.

For STRP uplink transmission of a UE having one or more panels as described above, by configuring/assuming the same DL RS as a default PL RS for all one or more (transmission) panels, a UE can measure pathloss from a target TRP to each panel using the same DL RS. Accordingly, since uplink transmission power to reach the target TRP from each panel corresponding to different directions (or beams) may be potentially different, a transmit power value (by an open loop power control parameter) applied to each panel can be calculated.

In addition, for STRP uplink transmission of a UE having one or more panels, by configuring/assuming the same one DL RS as a default spatial parameter for all one or more (transmission) panels, the UE may utilize a spatial domain (reception) filter value corresponding to a reception beam through which the corresponding DL RS was received in each panel from a target TRP and apply it as a default uplink beam (i.e. default spatial parameter, or spatial domain (transport) filter) of each panel.

As an additional example, a UL RS (e.g., SRS) may be included as a QCL Type-D RS of a DL TCI state. In this case, a QCL Type-D RS, that can be configured as a default spatial parameter/default PL RS, corresponding to the lowest CORESET ID described above and/or a QCL Type-D RS indicated in a TCI state of the lowest ID among TCI states for an activated PDSCH may be a UL RS.

In this case, when a (default) PL RS is configured to a UL RS, a UE may configure/assume a PL RS configured/activated/indicated in association with the corresponding UL RS as a PL RS of a target uplink transmission. In addition, when a (default) spatial parameter is configured to a UL RS, a UE may perform target uplink transmission by utilizing a spatial parameter of the corresponding UL RS. Accordingly, even when a UL RS is introduced as a QCL Type-D RS, a UE can perform an uplink transmission operation based on a default spatial parameter/default PL RS.

Embodiment 1-2

The present embodiment relates to a default spatial parameter/default PL RS applied to uplink transmission of a multi-panel UE to MTRP. Although this embodiment is described based on a multi-panel UE, it may also be applied to a single-panel UE.

When a specific uplink transmission (e.g., dedicated-PUCCH, dedicated-SRS, PUSCH (e.g., PUSCH scheduled by fallback DCI (e.g., DCI format 0_0) that does not include spatial parameter indication information)) of a multi-panel UE is for MTRP transmission, the UE may differently configure/assume a default spatial parameter and a default PL RS of the corresponding uplink transmission for each target TRP and/or each TO. Furthermore, when if each (transmission) panel of a multi-panel UE is mapped/associated/configured to a specific target TRP and/or TO, depending on the relationship, a default spatial parameter and a default PL RS of each (transmission) panel may be differently configured/assumed for each panel.

That is, different default spatial parameters/default PL RSs may be applied to each TRP/TO/panel, and accordingly, a plurality of default spatial parameters/default PL RSs may be applied to a plurality of TRPs/TO/panels.

Hereinafter, examples of multiple DCI-based uplink transmission and single DCI-based uplink transmission will be described.

Embodiment 1-2-1

When MTRP uplink transmission is performed based on multiple DCI, based on which CORESET group a CORESET in which DCI scheduling/triggering/indicating/configuring uplink transmission is received/monitored belongs to, a UE may recognize which TRP the corresponding uplink transmission is directed to.

This assumes that a specific CORESET (or specific CORESET group) and a specific TRP (or TO) are associated/mapped.

For example, in the case of uplink transmission such as a PUSCH/aperiodic (AP)-SRS, based on which CORESET (or CORESET group) DCI scheduling a PUSCH or triggering an AP-SRS is received/monitored, a UE can recognize which TRP/TO the target uplink transmission corresponds to.

In the case of a PUCCH or a periodic/semi-static SRS, a relationship between a specific target uplink transmission and a specific CORESET (or CORESET group) and/or a specific TRP/TO may be configured/indicated/updated through RRC/MAC signaling. For example, in the case of a PUCCH, a specific PUCCH resource group and/or a PUCCH resource set may be associated/mapped with a specific CORESET/CORESET group and/or a specific TRP/TO. In the case of a periodic SRS or a semi-static SRS, a specific SRS resource set may be associated/mapped with a specific CORESET/CORESET group and/or a specific TRP/TO.

A case in which a CORESET is configured in a CC/BWP in which uplink transmission is performed will be described first.

In this case, a default spatial parameter and a default PL RS of a specific uplink transmission for each TRP/TO may be determined based on one or more of i) a specific CORESET within a group of CORESETs associated/configured with each TRP/TO, or ii) a specific CORESET configured for a specific cell among cell(s) configured with each TRP/TO.

For example, a specific CORESET may be a CORESET having the lowest ID.

In addition, cell(s) configured for each TRP/TO may be cell(s) in which different CORESET groups (or a CORESET pool with different indexes) are configured together and/or cell(s) related to a CORESET group associated/configured with a corresponding TRP/TO. That is, one or more cells configured for each TRP/TO may be related to different CORESETs or may be related to the same CORESET.

For example, a specific cell may be a cell having the lowest ID.

When a CORESET is configured in a CC/BWP in which uplink transmission is performed, specific examples of the above i) is performed will be described.

For example, based on an association/configuration between a TRP/TO and a CORESET group, a UE may configure/assume a QCL Type-D RS corresponding to the lowest CORESET ID in a CORESET group associated with a specific TRP/TO as a default spatial parameter/default PL RS applied to uplink transmission for a specific TRP/TO.

Additionally or alternatively, a UE may configure/assume a QCL Type-D RS corresponding to a specific CORESET (e.g., a CORESET with the lowest ID) within a specific cell(s) (e.g., a serving cell having the lowest ID among cells in which CORESETs corresponding to different CORESET groups are configured together, and/or serving cells having the lowest ID among cells in which CORESETs corresponding to each CORESET group are configured) among serving cell(s) configured for the UE as a default spatial parameter/default PL RS of a specific uplink transmission for each TRP/TO scheduled/triggered/indicated/configured for different CORESET groups.

When a CORESET is configured in a CC/BWP in which uplink transmission, specific examples of the above ii) is performed will be described.

For example, assume a situation in which CORESET group #0 (or CORESETPoolIndex 0) corresponds to cell #0, CORESET groups #0 and #1 (or CORESETPoolIndex 0/1) correspond to cell #1, CORESET group #0 (or CORESETPoolIndex 0) corresponds to cell #2, and CORESET groups #0 and #1 (or CORESETPoolIndex 0/1) correspond to cell #3. In addition, it is assumed that COREST group #0 (or CORESETPoolIndex 0) corresponds to TRP1, and CORESET group #1 (or CORESETPoolIndex 1) corresponds to TRP2.

In this case, for each of TRP1 and TRP2, serving cells in which different CORESETPoolIndexes are configured together are cells #1 and #3, and a serving cell having the lowest ID among them is cell #1. Accordingly, it can be configured/assumed that a CORESET having the lowest ID among CORESET(s) of CORESETPoolIndex 0 and a CORESET having the lowest ID among CORESET(s) of CORESETPoolIndex 1 are used in cell #1.

Additionally or alternatively, serving cells including CORESETPoolIndex 0 for TRP1 are cells #0, #1, #2 and 3, a serving cell with the lowest ID among them is cell #0. Accordingly, it may be configure/assumed that a CORESET having the lowest ID among CORESET(s) of CORESETPoolIndex 0 in cell #0 is used. In addition, serving cells including CORESETPoolIndex 1 for TRP2 are cells #1 and #3, and a serving cell having the lowest ID among them is cell #1. Accordingly, it may be configure/assumed that a CORESET having the lowest ID among CORESET(s) of CORESETPoolIndex 1 in cell #1 is used.

A default spatial parameter/default PL RS of uplink transmission may be determined based on a spatial parameter/DL RS configured for a specific CORESET assumed to be used as above. That is, through configuring/assuming of a specific CORESET as described above, a default spatial parameter/default PL RS related to a reception beam when receiving DCI for scheduling/triggering/indicating a corresponding uplink transmission can be configured/assumed. Accordingly, transmit power and transmit beam direction of a specific uplink transmission for each TRP may be determined.

Hereinafter, a case in which CORESET is not configured in a CC/BWP in which uplink transmission is performed will be described.

For example, in multi-DCI-based MTRP uplink transmission, a CORESET may not be configured in a CC/BWP in which MTRP uplink transmission is performed. In this case, aa UE may apply a configuration/assumption for a default spatial parameter/default PL RS as follows.

In this case, a default spatial parameter and a default PL RS of specific uplink transmission for each TRP/TO may be determined based on one or more of QCL Type-D RSs indicated in specific TCI state(s) among i) a QCL Type-D RS indicated in specific TCI state(s) among TCI states for a PDSCH activated in a corresponding CC/BWP (where MTRP uplink transmission is performed), or ii) TCI states for a PDSCH activated in each CC/BWP to which a CORESET associated/configured with each TRP/TO belongs.

Among TCI states for a PDSCH activated in a corresponding CC/BWP (where MTRP uplink transmission is performed), a specific TCI state(s) may be a TCI state(s) having the lowest ID (e.g., if TRP/TO is one of three TRP/TO IDs, any ID among the lowest ID, second lowest ID, and third lowest ID) associated with/configured in each TRP/TO.

Among TCI states for a PDSCH activated in each CC/BWP to which a CORESET associated/configured with each TRP/TO belongs, a specific TCI state(s) may be TCI state(s) having the lowest ID.

When a CORESET is not configured in a CC/BWP in which uplink transmission, specific examples of the above i) is performed will be described.

For example, a relationship between a specific target uplink transmission and a specific CORESET/TRP/TO may be defined/configured/indicated. In this case, among TCI states for a PDSCH activated in a corresponding CC/BWP (where MTRP uplink transmission is performed), a QCL Type-D RS indicated by a TCI state corresponding to the lowest ID may be related to a specific TRP/TO, and a QCL Type-D RS indicated by a TCI state corresponding to the second lowest ID may be related to another TRP/T2. In the case of uplink transmission for more than 2 TRPs, in addition to this, a QCL Type-D RS indicated by a TCI state corresponding to the third lowest ID may be related to another TRP/TO. Here, a mapping relationship between a TCI state ID and a TRP/TO index may be determined according to a predefined or preconfigured rule. For example, it may be associated with TRP1/TO1, TRP2/TO2, TRP3/TO3, ... in ascending order from the lowest TCI state ID in the form of pairing or ordered pair. Accordingly, for uplink transmission for each TRP/TO, a default spatial parameter/default PL RS may be configured/assumed.

When a CORESET is not configured in a CC/BWP in which uplink transmission, specific examples of the above ii) is performed will be described.

For example, a relationship between a specific target uplink transmission and a specific CORESET/TRP/TO may be defined/configured/indicated. In this case, a QCL Type-D RS indicated in a TCI state with the lowest ID among TCI states for a PDSCH activated in each CC/BWP to which a CORESET scheduling (or associated/mapped with target uplink channel) a corresponding target uplink transmission belongs may be configured/assumed as a default spatial parameter/default PL RS for uplink transmission for each TRP/TO. That is, since a CORESET does not exist in a CC/BWP in which MTRP uplink transmission is performed, a QCL Type-D RS indicated by a TCI state having the lowest ID among TCI states for a PDSCH activated in a CC/BWP to which a CORESET that schedules/triggers/indicates/configures specific uplink transmission belongs may be used as a default spatial parameter/default PL RS. Or,

As an additional example, when a CORESET does not exist in a CC/BWP in which MTRP uplink transmission is performed, a default spatial parameter/default PL RS may be configured/assumed based on a QCL Type-D RS of a CORESET having the lowest ID in a CORESET group to which a CORESET scheduling/triggering/indicating/configuring specific uplink transmission belongs.

Embodiment 1-2-2

When MTRP uplink transmission is performed based on single DCI, a spatial parameter may be preconfigured for each TRP/TO, and a UE may configure/assume a default spatial parameter/default PL RS based on the preconfigured spatial parameter.

For example, a spatial parameter configured through higher layer signaling (e.g., RRC or MAC CE signaling) for each TRP/TO may be spatialRelationInfo/UL-TCI, and a DL RS (e.g., SSB-RI, CRI)/UL RS (e.g., SRI) can be linked/related/referenced for each TRP/TO by spatialRelationInfo/UL-TCI. Accordingly, spatial parameters of uplink transmission for each TRP/TO may be configured/updated (semi -statically). In this case, a spatial parameter preconfigured for each TRP/TO (e.g., an RS associated with each TRP/TO) can be configured/assumed as a default spatial parameter/default PL RS to be applied to uplink transmission for each TRP/TO.

As a further example, in order to more dynamically configure/indicate a spatial parameter for MTRP uplink transmission, DCI for scheduling/triggering/indicating MTRP uplink transmission (i.e., single DCI) may include indication information on a plurality of spatial parameters to be applied to a plurality of uplink TOs. For example, spatial parameter indication information included in DCI may be provided to a UE through a plurality of (e.g., as many as a number of TRP/TO) SRI fields or UL-TCI fields. When a number of TRP/TO is N, each of N SRI/UL-TCI fields may indicate a DL RS (e.g., SSB-RI, CRI)/UL RS (e.g., SRI) . Accordingly, dynamic uplink spatial parameter indication may be possible.

Alternatively, one SRI/UL-TCI field may be included in DCI (i.e., single DCI) for scheduling/triggering/indicating MTRP uplink transmission. In this case, one SRI/UL-TCI field may indicate one codepoint among a plurality of codepoints, and each of the plurality of codepoints may include one or a plurality of spatial parameters. That is, N Tx beams directed to N TRPs/for N TOs may be indicated through one SRI/UL-TCI field. One codepoint may link/connect (in the form of an ordered pair) reference RSs (e.g., DL RS/UL RS) for N transmission beams through higher layer (e.g., RRC/MAC CE) configuration/description. That is, a plurality of codepoints (i.e., spatial parameter set candidates) may be preconfigured by higher layer signaling, and one codepoint (i.e., one set of a plurality of spatial parameters) among a plurality of codepoints (i.e., spatial parameter set candidates) may be indicated to a UE by DCI.

As described above, when multiple (e.g., N) spatial parameters are configured/indicated to a UE through one/multiple spatial parameter indication fields (e.g., one/multiple SRI/UL-TCI fields) in DCI for MTRP uplink transmission, a UE may configure/assume a default spatial parameter/default PL RS based on a specific spatial parameter among a plurality of spatial parameters. For example, N spatial parameters may correspond to codepoints of an SRI field or a UL-TCI field linked/connected to a reference RS (e.g., DL RS/UL RS) (in the form of an ordered pair). A reference RS (e.g., DL RS/UL RS) linked/connected by RRC configuration to an SRI field of the lowest index or the lowest UL-TCI field among N spatial parameters may be configured/assumed as a default spatial parameter/default PL RS for a specific uplink transmission for each TRP/TO.

That is, a default spatial parameter/default PL RS to be applied for specific uplink transmissions for N TRPs/TOs may be configured/assumed by a UE to a specific one spatial parameter (e.g., corresponding to the lowest index/ID) among N spatial parameters indicated through an SRI/UL-TCI field of DCI related to other uplink transmissions prior to the specific uplink transmissions.

As an additional example, a default spatial parameter/default PL RS to be applied to uplink transmission may be configured/assumed to a specific one spatial parameter among N spatial parameters configured/indicated through DCI related to downlink reception prior to uplink transmission.

For example, a default spatial parameter/default PL RS may be applied to a PUCCH carrying ACK/NACK information (e.g., HARQ-ACK) for downlink reception. In this case, a PUCCH resource indicated by a PRI field in DCI (i.e., downlink grant DCI) scheduling downlink data to support MTRP PUCCH may be mapped/associated with a plurality of spatial parameters. For example, a PRI field of DL grant DCI may indicate one of a plurality of code points, and for each of the plurality of code points, i) a plurality of spatial parameters (e.g., spatial relation info/UL TCI state/unified TCI state) may be configured/mapped to one PUCCH resource, or ii) to a plurality of PUCCH resources. Accordingly, a default spatial parameter/default PL RS may be configured/assumed based on one specific spatial parameter among a plurality of spatial parameters of one or more PUCCH resources for one codepoint indicated by a PRI field.

As a specific example of the above i), among codepoints of a PRI field to which one PUCCH resource in which a plurality of spatial relation info/UL TCI state/unified TCI state is configured is configured/mapped, a plurality of reference RSs (e.g., DL RS / UL RS) corresponding to a codepoint of the lowest index may be used as a default spatial parameter/default PL RS for MTRP PUCCH transmission of a UE.

Additionally or alternatively, as a specific example of the above ii), among codepoints of a PRI field to which a plurality of PUCCH resources are configured/mapped, reference RSs (e.g., DL RS / UL RS) of a plurality of PUCCH resources corresponding to a codepoint of the lowest index may be used as a default spatial parameter/default PL RS for MTRP PUCCH transmission of a UE.

In the above examples, an SRI field or a UL-TCI field may be replaced with a DL/UL unified TCI state field. A DL/UL unified TCI state field is not intended to limit the scope of the present disclosure by its name, and it may mean a spatial parameter indication field extended so that a QCL type-D RS and/or spatial relation reference RS (e.g., DL RS/UL RS) of a TCI state having a specific ID can be used as both a reference RS of a DL reception beam and a reference RS of a UL transmission beam.

For example, when a DL/UL RS indicated by a UL-TCI field and/or a DL/UL unified TCI state field is used for configuring/indicating a transmission beam of a PUCCH (e.g., when configuring/indicating a spatial parameter of an A/N PUCCH by replacing a PRI field), similar to the above examples, as a default spatial parameter/default PL RS for PUCCH transmission for each TRP/TO, a plurality of reference RSs (e.g., DL RS/UL RS) corresponding to a specific codepoint (e.g., of the lowest index) among codepoints to which a plurality of spatial parameters (e.g., reference RS for transmission beam (e.g., DL RS / UL RS)) indicated by a UL-TCI field and/or a DL/UL unified TCI state field are linked/connected (in the form of ordered pairs) may be configured/assumed. In addition, a plurality of reference RSs (e.g., DL RS/UL RS) corresponding to the specific codepoint may be used as a default spatial parameter/default PL RS for PUSCH/SRS transmission for each TRP/TO.

Additionally or alternatively, in MTRP uplink transmission of a UE, as a default spatial parameter/default PL RS for a specific uplink transmission for each TRP/TO, a plurality of reference RSs (e.g., DL RS/UL RS) configured in a TCI state corresponding to the lowest ID may be utilized among TCI states in which a plurality of reference RSs (e.g., DL RS/UL RS) for a plurality of Tx (/Rx) beams in a set (e.g., pool) of DL/UL unified TCI state candidates are linked/connected (in the form of ordered pairs).

As described above, additional examples for a case in which a CORESET is not configured for a corresponding CC/BWP (in which MTRP downlink/uplink transmission/reception is performed) or a case of single DCI-based MTRP DL/UL transmission/reception are described below.

In single DCI-based MTRP downlink transmission and reception, when a CORESET is not configured in a corresponding CC/BWP for a UE Rx beam indication for a PDSCH from each TRP, a TCI state field in DL grant DCI may indicate/activate one specific codepoint among one or more codepoint candidates. Here, for each of one or more codepoint candidates, two or more TCI states (IDs) may be configured/associated/mapped. Accordingly, two or more TCI states (IDs) corresponding to one specific codepoint indicated by a TCI state field of DCI may be activated.

In MTRP uplink transmission of a UE, as a default spatial parameter/default PL RS for a specific uplink transmission for each TRP/TO, among one or more codepoint candidates related to the TCI field of the DL grant DCI, a transmit/receive beam reference DL RS/UL RS of two or more TCI states corresponding to a codepoint of the lowest index may be utilized.

When a CORESET is not configured in a corresponding CC/BWP (in which MTRP uplink transmission is performed), in a CC/BWP scheduling corresponding uplink transmission, among one or more codepoint candidates related to a TCI state field of DL grant DCI, a UE may utilize a transmission/reception beam reference DL RS/UL RS of two or more TCI states corresponding to a codepoint of the lowest index as a default spatial parameter/default PL RS.

In the above examples, a base station may define/configure/indicate a correspondence relationship between a plurality of TOs (or a plurality of TO groups) in which uplink transmission is performed and a plurality of default spatial parameters/default PL RSs.

In the above examples, even when TOs in which a single-panel UE performs MTRP uplink transmission are TDMed, it may be applied to configure/assume a default spatial parameter/default PL RS for uplink transmission for each TRP/TO. In addition, in the above-described examples, even when TOs in which a multi-panel UE performs MTRP uplink transmission are TDMed/SDMed/FDMed, it may be applied to configure/assume a default spatial parameter/default PL RS for uplink transmission for each TRP/TO. In addition, the above-described examples are mapped/associated/configured with a specific (transmission) panel of a multi-panel UE for uplink transmission for each TRP/TO, it may also be applied to configure/assume a default spatial parameter/default PL RS for each panel.

Embodiment 1-3

In a single-panel UE or multi-panel UE, when MTRP uplink transmission (or uplink TO) is performed in an SDM/FDM/single frequency network (SFN) scheme, uplink power control may be performed based on one specific TRP/TO. Here, an SFN scheme may include simultaneously transmitting the same information for MTRP.

For example, open-loop/closed-loop power control for each destination TRP and/or for each TO of UE-specific uplink transmission may be performed in one process (e.g., power control parameter set) based on one specific TRP.

Here, a specific TRP/TO may be one or more of a predefined/preconfigured default TRP/TO, a TRP/TO closest to a UE (e.g., having the highest received signal strength), or a TRP/TO farthest from a UE (e.g., having the lowest received signal strength). When power control is performed for all multiple TRPs/TOs based on the TRP/TO closest to a UE, an effect of UE power saving can be obtained. When power control is performed for all multiple TRPs/TOs based on the TRP/TO farthest from a UE, a diversity effect or an effect of increasing a signal-to-noise ratio (SNR) can be obtained even if power consumption increases.

A method of performing power control based on one specific TRP/TO in MTRP uplink transmission can also be applied/utilized to a configuration/assumption of a default spatial parameter/default PL RS of a UE as described above. For example, a UE may apply a default spatial parameter/default PL RS configured/assumed for the specific one TRP/TO to all multiple TRPs/TOs. That is, the same default spatial parameter/default PL RS can be applied in multiple TRPs/TOs. In this case, even if a TRP/TO and a (transmission) panel are associated in a multi-panel UE, a configuration/assumption for a default spatial parameter/default PL RS in the multi-panel may be the same.

In the detailed examples of Embodiments 1-2 and 1-3 described above, in addition to DL RS (e.g., SSB/CSI-RS) as a QCL Type-D RS of a DL TCI state, UL RS (e.g., SRS) may be included. When a UL RS is configured/assumed as a default spatial parameter/default PL RS, similarly to Embodiment 1-1, a UE may configure/assume a default spatial parameter/default PL RS. That is, even in Embodiments 1-2 and 1-3, when a (default) PL RS is set to a UL RS, a UE may configure/assume a PL RS that is configured/activated/indicated in association with the corresponding UL RS as a PL RS of target uplink transmission. In addition, when a (default) spatial parameter is set to a UL RS, a UE may perform target uplink transmission using a spatial parameter of the corresponding UL RS. Accordingly, even when a UL RS is introduced as a QCL Type-D RS, a UE can perform an uplink transmission operation based on a default spatial parameter/default PL RS.

The detailed examples of the above-described Embodiment 1 are not limitedly applied only to MTRP uplink transmission, and it can also be applied to uplink transmission when multiple cells or carrier aggregation (CA) is configured or when repetitive transmission is configured in a single cell. For example, when one DCI schedules simultaneously uplink transmission (e.g., PUSCH transmission) on a plurality of cells, by considering PUSCH transmission in each cell as corresponding to a plurality of TRPs/TOs in the above-described examples, a configuration/assumption for a default spatial parameters/default PL RS for each cell may be applied. Even in the case of repetitive transmission, by considering a plurality of repeated transmission occasions as corresponding to a plurality of TRPs/TOs in the above examples, a configuration/assumption for a default spatial parameter/default PL RS for each cell can be applied.

In addition, with respect to the operation according to the detailed examples of Embodiment 1, whether to enable or not (e.g., on/off switching) may be configured/indicated by higher layer (e.g., RRC/MAC CE) signaling for each target uplink transmission.

Embodiment 2

This embodiment relates to a default spatial parameter/default PL RS for a PUSCH transmission scheduled by DCI (e.g., DCI format 0_1) including spatial parameter indication information rather than fallback DCI.

The aforementioned default spatial relation (or default beam) and default PL RS-based operation for STRP transmission may be applied to a PUSCH scheduled by fallback DCI (e.g., DCI format 0_0 that does not include spatial parameter indication information), or may be applied to a PUCCH or an SRS. In addition, whether to enable a default spatial relation and a default PL SR-based operation can be configured by a base station to a UE through the following three RRC parameters.

- enableDefaultBeamPlForPUSCH0_0 for a PUSCH scheduled by DCI format 0_0
- enableDefaultBeamPlForPUCCH for a dedicated PUCCH
- enableDefaultBeamPlForSRS for a dedicated SRS

A method of applying such a default spatial relation and default PL RS operation to a PUSCH scheduled by DCI format 0_1, which is a non-fallback DCI format, has not yet been determined.

In DCI format 0_1, a PUSCH spatial relation is explicitly indicated by indicating an SRS resource for CB or NCB through an SRI field in a DCI payload. When a PUSCH default spatial parameter/default PL RS-based operation is applied, a problem of colliding with spatial relation information indicated by an SRI may occur.

In addition, an SRS for CB or NCB may be applied to perform UL link adaptation before PUSCH scheduling. When a default spatial parameter/default PL RS-based operation is enabled (or set to on) for a PUSCH scheduled by DCI format 0_1 and disabled (or set to off) for an SRS, since an SRS for CB or NCB for link adaptation is transmitted based on an uplink beam by a specific spatial relation configuration and a PUSCH is transmitted based on an uplink beam corresponding to a default spatial relation, a problem in which a beam for link adaptation and a PUSCH beam are different may occur.

In order to solve this problem, the following examples can be applied.

Embodiment 2-1

When a default spatial parameter/default PL RS-based operation is enabled (or on) for a PUSCH scheduled by DCI format 0_1, a UE can expect that spatial parameters are not configured for SRS resource(s) in SRS resource set(s) for CB or NCB use (or a base station may not configure a spatial parameter for SRS resource(s) in SRS resource set(s) for CB or NCB use for a UE). Accordingly, even if there is a spatial parameter indication for a PUSCH through the SRI field in DCI format 0_1 (without ambiguity as no spatial parameters are configured for SRS resource(s) indicated by an SRI field), a UE may perform PUSCH transmission based on configuration/assumption of a default spatial parameter/default PL RS for a corresponding PUSCH.

As a further example, for SRS resource(s) in SRS resource set(s) for CB or NCB use for which spatial parameters are not configured, a UE may apply a default spatial parameter/default PL RS configured for a PUSCH scheduled by DCI format 0_1. This is to solve a problem in which spatial parameters (or uplink beams) of SRS transmission for uplink link adaptation and PUSCH transmission performed based on a corresponding link adaptation result are different. Accordingly, spatial parameters (or beams) of a PUSCH scheduled by DCI format 0_1 and an SRS for link adaptation can be aligned.

Embodiment 2-2

When a default spatial parameter/default PL RS-based operation is enabled (or on) for a PUSCH scheduled by DCI format 0_1, even if a UE has a spatial parameter configured for SRS resource(s) (to be indicated by an SRI field) within SRS resource set(s) for CB or NCB, PUSCH transmission may be performed based on a default spatial parameter/default PL RS for a PUSCH, ignoring a spatial parameter for SRS resource(s) indicated by an SRI. Accordingly, even if a spatial parameter is configured for an SRS resource for link adaptation and the corresponding SRS resource is indicated by an SRI field, for a PUSCH scheduled by DCI format 0_1, high priority is given to a default spatial parameter/default PL RS-based operation. Accordingly, an ambiguity of a spatial parameter (or beam) to be applied to a PUSCH can be removed.

As a further example, for SRS resource(s) in SRS resource set(s) for CB or NCB use configured with a spatial parameter, when transmitting the corresponding SRS resource by a configuration/activation/trigger of a base station, a UE may ignore a spatial parameter preconfigured for the corresponding SRS resource and apply a default spatial parameter/default PL RS configured/assumed to a PUSCH scheduled by DCI format 0_1. Accordingly, spatial parameters (or beams) of a PUSCH scheduled by DCI format 0_1 and an SRS for link adaptation can be aligned.

Embodiment 2-3

For a PUSCH scheduled by DCI format 0_1, a UE can expect that a default spatial parameter/default PL RS-based operation and whether a default spatial parameter/default PL RS-based operation for SRS are enabled are the same. That is, for non-fallback DCI-based PUSCH and SRS, a UE can expect that all of default spatial parameter/default PL RS-based operations will be enabled (or on), or all disabled (or off) (alternatively, a base station may be configure to enable or disable all of default spatial parameter/default PL RS-based operations for non-fallback DCI-based PUSCH and an SRS for a UE). Accordingly, since spatial parameter (or uplink beam) of an SRS for link adaptation and PUSCH transmission performed based on the corresponding link adaptation result can be determined based on a default spatial parameter/default PL RS or a spatial parameter configured for an SRS resource indicated by an SRI, spatial parameters (or beams) of an SRS for link adaptation and a PUSCH scheduled by DCI format 0_1 may be aligned.

In the above examples, an enable parameter for a default spatial parameter/default PL RS-based operation for a PUSCH scheduled by DCI format 0_1 may be defined as an enable parameter integrated with an enable parameter for a default spatial parameter/default PL RS-based operation for a PUSCH scheduled by DCI format 0_0, or may be defined as a separate enable parameter. When defined as a separate enable parameter, each enable parameter may equally indicate whether to enable or not, and may indicate whether to enable differently.

In the above examples, various methods may be applied to a mapping relationship between a plurality of TOs and a plurality of default spatial parameters/default PL RSs. This mapping method may be preconfigured by a base station, or a specific mapping method may be applied without separate signaling. In the following examples, a number of TOs and a number of default spatial parameters/default PL RSs may be the same or different.

For example, a plurality of default spatially related/default PL RSs may be sequentially mapped in an ascending order of indices of a plurality of TOs.

As a further example, a plurality of TOs may be grouped into a plurality of TO groups, and a plurality of default spatially related/default PL RSs may be sequentially mapped in ascending order of indices of TO groups.

As an additional example, a plurality of TOs may be grouped into a plurality of TO groups, and for each TO group, a plurality of default spatially related/default PL RSs may be cyclically and sequentially mapped in ascending order of indexes of TO groups.

UE default spatial relation or/and default pathloss reference signal (default PL RS) configuration considering multiple TRP (M-TRP) PDCCH repetition

As described above, introduction of M-TRP PDCCH repetition transmission in which a plurality of base stations (i.e., M-TRP) transmits (dividedly) the same PDCCH (or the same DCI) is being discussed in a standardization conference. Specifically, in order to improve reliability of a PDCCH, a PDCCH is repeatedly transmitted by a plurality of TRPs, and the repetition PDCCH may schedule a PDSCH/PUSCH, an A/N (Acknowledgement/Negative Acknowledgment) PUCCH, and an SRS.

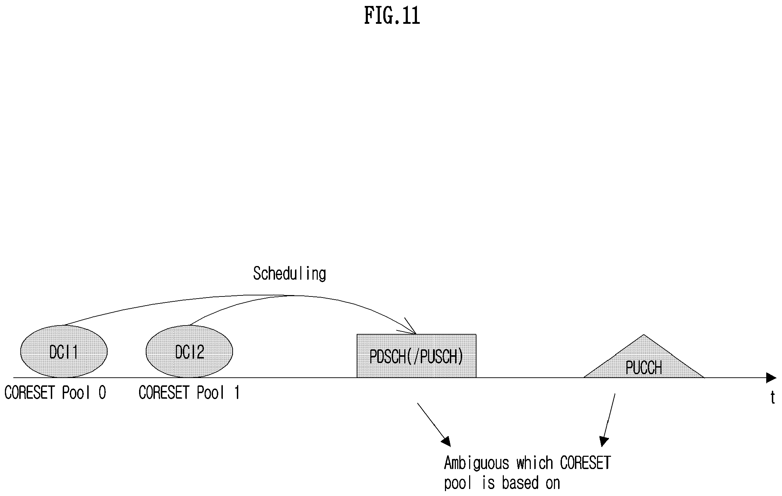

FIG. 11 is a diagram illustrating PDSCH/PUSCH/PUCCH transmission based on MTRP PDCCH repetitive transmission.

Referring to FIG. 11, DCI 1 and 2 are the same DCI transmitted through TRP 1 and TRP 2, respectively (i.e., through DL beam 1 and DL beam 2), and reliability is increased through repeated transmission. In FIG. 11, it is assumed that DCI 1 and 2 are transmitted through CORESETs belonging to different CORESET pool indexes. In addition, it is assumed that DCI 1 and 2 are transmitted through different search space sets.

In this case, a PDSCH/PUSCH, an A/N (ACK/NACK) PUCCH, and an SRS scheduled by repetition DCI are ambiguous to which CORESET pool they are associated (to which they belong). Therefore, an ambiguous problem arises in applying the current standard to a default spatial relation of a UL channel/RS scheduled by repetition DCI or/and a default pathloss reference signal (default PL RS) configuration. To solve this problem, assuming that a representative CORESET pool is determined among CORESET pools to which DCI (e.g., DCI for scheduling frequency/time resources for transmission/reception of a PDSCH/PUSCH by a UE, DCI for triggering reporting of HARQ information by a UE, DCI for triggering SRS transmission by a UE) scheduling/associated with a PDSCH/PUSCH, an A/N PUCCH, and an SRS belong, and that a PDSCH/PUSCH, an A/N PUCCH, and an SRS are associated with a representative pool, a method for allowing a UE to determine a default spatial relation or/and default PL RS of a corresponding UL channel/RS is proposed.

For convenience of description in the present disclosure, a CORESET pool may be substituted with a pool and described.

In the present disclosure, when single DCI is repeatedly transmitted by different TRPs (e.g., base stations), a channel (e.g., PDCCH) carrying the single DCI may correspond to each TRP and be regarded as a separate channel. For example, a first TRP may transmit DCI through a first PDCCH, and a second TRP may transmit the DCI through a second PDCCH.

Alternatively, when single DCI is repeatedly transmitted by different TRPs (e.g., base stations), a channel (e.g., PDCCH) carrying the single DCI may be regarded as the same channel regardless of a TRP. For example, a first TRP and a second TRP may transmit DCI through the same single PDCCH. Here, a single PDCCH may be transmitted on the same time/frequency/spatial resource from a first TRP and a second TRP (i.e., SFN (single frequency network) transmission method). Alternatively, actual frequency/time/spatial resources through which each TRP transmits the PDCCH may be different, but may be regarded as one PDCCH.

Hereinafter, in the present disclosure, for convenience of description, an operation based on two TRPs is assumed and described (i.e., a first TRP and a second TRP), but the present disclosure is not limited thereto, and may be extended and applied to operations based on three or more TRPs. In addition, hereinafter, in the present disclosure, for convenience of description, PDCCHs transmitted in a first TRP and a second TRP are described as a first PDCCH and a second PDCCH, respectively. Here, as described above, a first PDCCH and a second PDCCH may i) be separate channels, ii) may be the same channel actually transmitted on the same resource, iii) actually not transmitted on the same resource, but may be considered as the same channel.

In addition, for convenience of description in the present disclosure, as described above, a single PDCCH/DCI transmitted from M-TRP is referred to as a repetition PDCCH/DCI.

A representative CORESET pool may be determined by at least one of the following methods.

- A base station may indicate a representative pool among CORESET pools (i.e., CORESET pools to which CORESETs in which first and second PDCCHs carrying repetitive DCI are monitored/transmitted belong respectively) to which repetitive DCI belongs to a UE through RRC/MAC-CE signaling or DCI.
- Alternatively, a base station and a UE promise (regulate) a specific pool as a representative pool among CORESET pools (i.e., CORESET pools to which CORESETs in which first and second PDCCHs carrying repetitive DCI are monitored/transmitted belong respectively) to which repetitive DCI belong. For example, a CORESET pool having the lowest (or highest) pool index may be determined as a representative COREST pool. As another example, a CORESET pool to which a CORESET having the lowest (or highest) CORESET ID among CORESETs to which repetitive DCI belongs may be determined as a representative COREST pool. As another example, a CORESET pool to which a CORESET associated with (related to) the lowest (or highest) search space set ID among search space sets in which repetitive DCI is included belongs may be determined as the representative COREST pool.
- Alternatively, a CORESET pool for DCI appearing (/corresponding to the lowest subcarrier index) first in time order (/frequency order) may be determined as a representative COREST pool.

Embodiment 3: A default beam (i.e., default spatial relation) and a default PL RS related operation for a single non-repeated UL channel/RS (e.g., PUSCH, PUCCH, SRS) (scheduled by a repetition PDCCH) is proposed as follows do.

Embodiment 3-1: When one or more CORESET configurations exist in a component carrier (CC) (or cell/bandwidth part (BWP)) on which a specific UL channel/RS (e.g., PUSCH, PUCCH, SRS) is scheduled (i.e., when one or more CORESET is configured or when one or more CORESETs are provided)

For a default spatial relation or/and default PL RS of a single UL channel/RS (scheduled by a repetition PDCCH), a UE may configure/assume a QCL (reference) RS (e.g., QCL type-D reference RS) for a spatial Rx parameter corresponding to (configured in) a CORESET having a specific ID (e.g., lowest/highest ID) in the representative CORESET pool.

And/or, regardless of a representative CORESET pool, for a default spatial relation and/or default PL RS of a UL channel/RS scheduled by the repetition PDCCH, a UE may configure/assume a QCL (reference) RS (e.g., QCL type-D reference RS) for a spatial Rx parameter corresponding to a CORESET having a specific ID (e.g. lowest/highest ID) within a corresponding CC (or cell)/BWP.

Embodiment 3-2: When a CORESET configuration does not exist in a CC (or cell)/BWP where a specific UL channel/RS (e.g., PUSCH, PUCCH, SRS) is scheduled (i.e., when a CORESET is not configured or when a CORESET is not provided)

According to the current standard, TCI state(s) (i.e., TCI table/pool/candidates) activated (e.g., by MAC-CE, etc.) for a TCI state field for PDSCH scheduling may be configured differently for each CORESET pool. For example, different TCI table/lists (e.g., up to 8 TCI states) may be activated for each CORESET pool by a MAC-CE, etc.

Here, even if a TCI state for a PDSCH is indicated through a TCI state field in (repetition) DCI, it is ambiguous which TCI table for a CORESET pool a UE should use to interpret the indicated TCI state value. Therefore, a representative CORESET pool among multiple CORESET pools may be determined, and a UE can interpret the TCI state field using a TCI table/list defined in the representative CORESET pool and determine a TCI state for PDSCH DMRS reception.

Accordingly, when a CORESET configuration does not exist in a CC (or cell)/BWP where a UL channel/RS is scheduled, for a default spatial relation and/or a default PL RS of a UL channel/RS scheduled by the repetition PDCCH, a UE may configure/assume a QCL (reference) RS (e.g., QCL type-D reference RS) for a spatial Rx parameter indicated by specific TCI state(s) within a TCI table/list defined in a representative CORESET pool among TCI tables/lists for a PDSCH activated in a corresponding CC (or cell)/BWP.

Here, for example, the specific TCI state(s) may be a TCI state having the lowest (or highest) TCI state ID among activated TCI state(s) for a representative CORESET pool.

And/or, when a CORESET configuration does not exist in a CC (or cell)/BWP where a UL channel/RS is scheduled, ambiguity can be removed by configuring/activating only a single number of TCI tables/lists for PDSCHs activated in the CC/BWP. In this case, for a default spatial relation or/and default PL RS of a UL channel/RS scheduled by the repetition PDCCH, a UE may configure/assume a QCL (reference) RS (e.g. QCL type-D reference RS) for a spatial Rx parameter indicated by specific TCI state(s) (e.g., a TCI state with the lowest (or highest) TCI state ID) within a single TCI table/list activated in the corresponding CC (or cell)/BWP.

And/or, when DCI is repeatedly transmitted using different CORESET pools as described above, such ambiguity can be eliminated by configuring a common TCI table/list. Alternatively, even if TCI tables/lists are different, a base station may configure a TCI state with a specific (e.g., lowest/highest) TCI state ID among activated TCI state(s) of CORESET pool 0 related to DCI 1 (i.e., DCI transmitted by TRP 1) and a TCI state with a specific (e.g., lowest/highest) TCI state ID among activated TCI state(s) of CORESET pool 1 related to DCI 2 (i.e., DCI transmitted by TRP 2) to always be the same (Here, a UE may ignore corresponding DCI if corresponding TCI state values are different). In this case, for a default spatial relation or/and default PL RS of a UL channel/RS scheduled by the repetition PDCCH, a UE may configure/assume a QCL (reference) RS (e.g., QCL type-D reference RS) for a spatial Rx parameter indicated by a TCI state having the common lowest TCI state ID in a TCI table/list corresponding to each CORESET pool activated in a corresponding CC (or cell)/BWP.

Embodiment 3-3: One or more CORESET configurations exist in a CC (or cell)/BWP where a specific UL channel/RS (e.g., PUSCH, PUCCH, SRS) is scheduled, however when there are multiple TCI state/QCL type-D RSs configured/activated (for M-TRP PDCCH reception) in a CORESET (e.g., CORESET determined by Embodiment 3-1 above) with a specific ID (e.g., lowest/highest ID) within the corresponding CC (or cell)/BWP (e.g., i) when a plurality of TCI states are configured and each TCI state indicates one or more QCL type-D RSs, ii) when one TCI state is configured, but the TCI state indicates a plurality of QCL type-D RSs)

For a default spatial relation or/and default PL RS of a single UL channel/RS (scheduled by the repetition PDCCH), a UE may configure/assume a QCL (reference) RS (e.g., QCL type-D reference RS) for a spatial Rx parameter corresponding to the lowest TCI state ID among QCL (reference) RSs for multiple TCI state/spatial Rx parameters configured/activated in a CORESET with a specific ID (e.g., lowest/highest ID).

Alternatively, a base station may preconfigure/activate/define a QCL (reference) RS (e.g., QCL type-D reference RS) for a TCI state/spatial Rx parameter used as a default spatial relation or/and default PL RS among QCL (reference) RSs for multiple TCI states/spatial Rx parameters configured/activated in a CORESET having the lowest ID Receive parameter (spatial Rx parameter).

And/or, a UE may configure/assume a QCL (reference) RS (e.g., QCL type-D reference RS) QCL (reference) RS for a spatial Rx parameter of a TCI state configured/activated in a CORESET with the lowest ID among CORESETs in which a QCL (reference) RS for a single TCI state/spatial Rx parameter in the CC/BWP is configured/activated, as a default spatial relation or/and default PL RS of a UL channel/RS.

Embodiment 3-4: An A/N PUCCH default beam (i.e., default spatial relation) and a default PL RS operation for a PDSCH

For a default spatial relation or/and default PL RS of an A/N PUCCH for a PDSCH scheduled by single/repeated PDCCH transmission (i.e., a PUCCH whose transmission is indicated by a PUCCH resource indicator (PRI) field of DL grant DCI), a UE may configure/assume a QCL (reference) RS(s) (e.g., QCL type-D reference RS) for a spatial Rx parameter of a TCI state (s) configured (e.g., through RRC signaling)/activated (e.g., through MAC CE)/indicated (e.g., through DCI) for the scheduled PDSCH.

Embodiment 3-5: A default beam (i.e., default spatial relation) and a default PL RS operation of an SRS triggered by DL/UL grant DCI

When single/repetitive PDCCH transmission accompanying data scheduling (i.e., PDSCH, PUSCH) triggers an (aperiodic) SRS with data scheduling, for a default spatial relation or/and default PL RS of a corresponding SRS, a UE may configure/assume QCL (reference) RS(s) (e.g., QCL type-D reference RS) for TCI state(s) or/and a spatial Rx parameter configured/activated/indicated for the scheduled data.

According to the method proposed in the above-described Embodiment 3, a UE may determine a default PL RS for a single UL channel/RS and may determine/calculate transmit power of a single UL channel/RS based on pathloss measurement using a default PL RS.

In addition, according to the method proposed in the above-described Embodiment 3, a UE may determine a default spatial relation for a single UL channel/RS and may transmit a single UL channel/RS based on a corresponding default spatial relation. That is, a UE may transmit a single UL channel/RS using the same spatial domain filter as reception of an RS determined as a default spatial relation.

Embodiment 4: (a plurality of) default beam (i.e., default spatial relation) and default PL RS-related operation for repeated UL channels/RS transmission (e.g., PUSCH, PUCCH, SRS) are proposed as follows.

According to the current standardization discussion, discussion for supporting (M-TRP) repetition operation for a PUSCH or/and a PUCCH of a UE is in progress. First, in the case of PUSCH, a method of scheduling repeated PUSCH transmission based on (M-TRP) CB (codebook)/NCB (non-codebook) for multiple transmission occasions (TOs) (groups) through single-DCI are being discussed. Here, a method of indicating a plurality of transmission beams, precoders, and power control (PC) parameter sets (open-loop PC parameter(s) and closed-loop PC parameter(s)) for the PUSCH corresponding to each TO (group) (using a plurality of SRS resource indicator (SRI) fields, a plurality of transmit precoding matrix indicator (TPMI) fields, etc.) is being discussed. In addition, in the case of PUCCH, when indicating a PRI (PUCCH Resource Indicator; A/N PUCCH indication) for a PDSCH through single-DCI, a method of performing repeated (M-TRP) PUCCH transmission through a plurality of PUCCH-related configurations for multiple TOs (groups) by configuring/linking/activating a plurality of transmission beams and PC parameter sets for the indicated PUCCH resource is being discussed. In addition, when a (repetition) PUCCH resource for which a plurality of transmission beams and PC parameter sets are configured/linked/activated is used for semi-static (periodic transmission, semi-persistent transmission) transmission, (M-TRP) semi-static repetition PUCCH transmission may be supported.

Based on this background, the present disclosure describes a default beam (i.e., default spatial relation) and a default PL RS-related operation for PUSCH/PUCCH repeated transmission scheduled by single/repeated transmission PDCCH.

Embodiment 4-1: An operation related to a default beam (i.e., default spatial relation) and a default PL RS for (M-TRP) PUSCH/PUCCH/SRS repeated transmission scheduled by single transmission PDCCH or/and single-TRP repeated transmission PDCCH

In this case, the above-described configuring/defining for a representative CORESET pool may not be necessary.

In this case, at least one or more of the Embodiments of [a method in which a UE configures/assumes a default pathloss RS and a default spatial relation of a corresponding UL channel/RS differently for each target TRP or/and TO, when a specific UL channel/RS (e.g., dedicated-PUCCH, dedicated-SRS, PUSCH scheduled by DCI format 0_0) of a single-panel UE and a multi-panel UE is for M-TRP transmission] described in Embodiment 1-2 may be applied for a default spatial relation or/and default PL RS related operation for UE (M-TRP) repetitive transmission PUSCH/PUCCH.

Additionally, for single-DCI-based M-TRP PUSCH repetition transmission indication, a plurality of SRI fields/TPMI fields corresponding to a plurality of PUSCH TOs (groups) may exist in a DCI payload. Here, for a (M-TRP) default spatial relation or/and default PL RS for repeated transmission UL channel/RS (e.g., PUSCH, PUCCH, SRS), a UE may configure/assume spatial relation RS (DL/UL RS) (s) configured/mapped to the lowest codepoint in each of the plurality of SRI fields.

In the embodiments of Embodiments 1-2 and the embodiments of the plurality of SRI fields, a correspondence relationship between TOs (groups) of a plurality of (M-TRP) UL channel/RS repeated transmission of a UE and reference RSs (DL/UL RSs) for an operation of a plurality of default transmission beams/PL RSs is predefined/preconfigured by a base station. For example, in the above Embodiment 1-2, when a plurality of transmission beams/power control (PC) information configured for a PUCCH resource is used for a default UL operation of TOs (groups) of a plurality of (M-TRP) UL channel/RS repeated transmission of a UE, a first transmission beam/PC information configured in a PUCCH resource may correspond to a first TO (group) (by a preconfigured rule), and a second transmission beam/PC information may correspond to a second TO (group) (by a preconfigured rule). As another example, in the above proposal 1-2, when the lowest codepoint among codepoints including a plurality of TCI state(s) activated for the (M-TRP) PDSCH is used for a default UL operation of a TO (group) of a plurality of (M-TRP) UL channel/RS repeated transmission of a UE, a QCL type-D RS of a first TCI state of the lowest codepoint may correspond to a first TO (group), and a QCL type-D RS of a second TCI state may correspond to a second TO (group). As another example, when a spatial relation RS (DL/UL RS)(s) configured/mapped to the lowest codepoint in each of a plurality of SRI fields of the embodiment is used for a default UL operation of a TO (group) of a plurality of (M-TRP) UL channel/RS repeated transmission of a UE, a spatial relation RS (DL/UL RS) configured/mapped to the lowest code point in a first SRI field may correspond to a first TO (group), and a spatial relation RS (DL/UL RS) configured/mapped to the lowest code point in a second SRI field may correspond to a second TO (group).

The above embodiments may also be applied to Embodiment 4-2 [default beam and PL RS-related operation for PUSCH/PUCCH/SRS repeated transmission scheduled by M-TRP PDCCH repeated transmission].

Embodiment 4-2: Operation related to default beam (i.e., default spatial relation) and default PL RS for PUSCH/PUCCH/SRS repeated transmission scheduled by M-TRP PDCCH repeated transmission

In this case, the above-described representative CORESET pool may be configured/defined, but may not be used for an operation related to a default beam and default PL RS of a UE.

That is, a plurality of QCL type-D RSs configured/activated/indicated in a specific CORESET for reception of M-TRP PDCCH repeated transmission may be used for a default UL operation of a TO (group) of a plurality of (M-TRP) UL channel/RS repeated transmission. That is, a UE may determine a plurality of QCL type-D RSs configured/activated/indicated in a specific CORESET as a default spatial relation and default PL RS for (M-TRP) UL channel/RS repeated transmission.

Here, the specific CORESET may be a CORESET having the lowest (or highest) ID among CORESETs in which a plurality of TCI states are configured/activated in a CC (or cell)/BWP in which a corresponding UL channel/RS is scheduled.

Similarly, a correspondence relationship between TOs (groups) of a plurality of (M-TRP) UL channel/RS repeated transmission of the terminal and reference RSs (DL/UL RS) for operations of a plurality of default transmission beams/PL RSs may be predefined/preconfigured by a base station. For example, a QCL type-D RS of the lowest TCI state among a plurality of TCI states configured/activated in the specific CORESET may correspond to a first TO (group), and a QCL type-D RS of the remaining TCI states corresponds to a second TO (group).

The embodiments described in this disclosure (e.g., Embodiments 1 to 3, etc.) may operate independently, or any one or more embodiments may be applied in combination with each other.

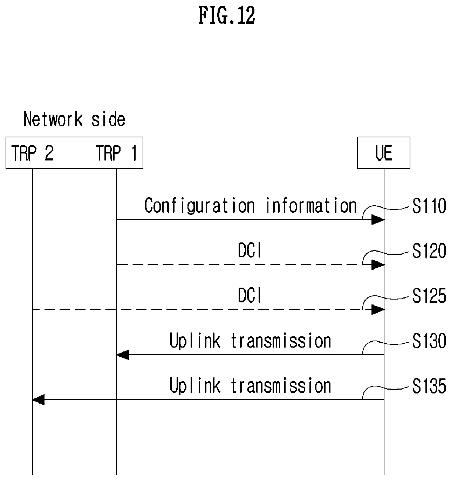

FIG. 12 illustrates a signaling procedure between a network and a UE for an uplink transmission and reception method according to an embodiment of the present disclosure.

An example of an operation of a base station and a UE for an uplink transmission/reception operation based on a default spatial parameter (or default spatial relation)/default PL RS according to the above-described Embodiment 1/2/3 and detailed examples thereof is as follows.

A base station may transmit configuration information related to uplink transmission (e.g., STRP/MTRP uplink transmission) to a UE, and the UE may receive it. In addition, a default spatial parameter (or default spatial relation)/default PL RS for uplink transmission of a UE may be configured/assumed. In addition, whether to enable a default spatial parameter (or default spatial relation)/default PL RS-based operation may be configured for a UE by a base station. In other words, a default spatial relation or default PL RS for the uplink transmission may be configured (i.e., enabled) or may not be configured (i.e., disabled) for the UE by the configuration information related to the uplink transmission.

For example, whether to enable a default spatial parameter/default PL RS-based operation for a corresponding uplink transmission may be configured through an enableDefaultBeamPl parameter for a specific uplink transmission (e.g., PUSCH/PUCCH/SRS). Embodiment 1-1 includes examples on a default spatial parameter/default PL RS configuration/assumption in the case of uplink transmission for STRP. Embodiments 1-2 and 1-3 include examples on a default spatial parameters/default PL RS configuration/assumption for each TRP/TO in the case of uplink transmission for MTRP.

A UE may calculate uplink transmission power based on a default PL RS. For example, uplink transmit power may be calculated for each TRP/TO, or uplink transmit power may be calculated based on one TRP/TO as in Embodiment 1-3. A UE may perform uplink transmission based on the calculated transmit power, and a base station may receive it.

In addition, a spatial parameter referred to by a UE for uplink transmission may be based on a default spatial parameter (or default spatial relation).

The above-described UE/base station operation is only an example, each operation (or step) is not necessarily essential, and an operation related to STRP/MTRP transmission according to the above-described embodiments may be omitted or can be added.

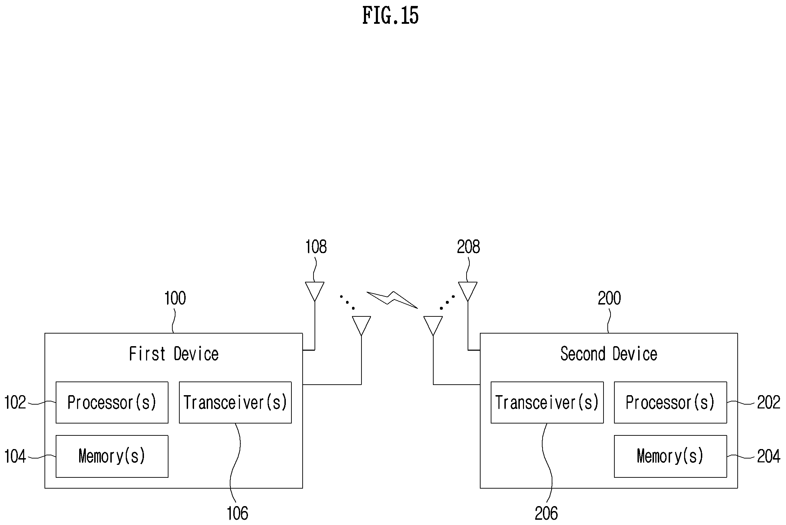

The operations of a base station/UE (e.g., operation related to STRP/MTRP uplink transmission based on Embodiment 1/2/3 and one or more of its detailed embodiments) according to the above embodiments may be processed by an apparatus of FIG. 15 (e.g., processors 102 and 202 of FIG. 15) to be described later.

In addition, the operations of a base station/UE (e.g., operation related to STRP/MTRP uplink transmission based on Embodiment 1/2/3 and one or more of its detailed embodiments) according to the above-described embodiments may be stored in a memory (e.g., 104 and 204 of FIG. 15) in the form of an instruction/program (e.g., instruction, executable code) for driving at least one processor (e.g., 102 and 202 in FIG. 15)). 104, 204).

FIG. 12 shows signaling between a network side (e.g., TRP1 and TRP2) and a UE in a multi-TRP (or multi-cell, hereinafter TRP may be substituted with a cell) situation to which the methods proposed in this disclosure (e.g., Embodiment 1/2/3 and one or more of its detailed embodiments) can be applied. Here, a UE/network side is only an example, and may be alternatively applied to various devices described in relation to FIG. 15. FIG. 12 is only for convenience of description and does not limit the scope of the present disclosure. In addition, some step(s) shown in FIG. 12 may be omitted depending on circumstances and/or settings.

Referring to FIG. 12, for convenience of description, signaling between two TRPs and a UE is considered, but the corresponding signaling scheme is extended and applied to signaling between multiple TRPs and multiple UEs. In the following description, a network side may be one base station (BS) including a plurality of TRPs, or may be one cell including a plurality of TRPs. For example, an ideal/non-ideal backhaul may be configured between TRP 1 and TRP 2 constituting the network side. In addition, the following description is based on a plurality of TRPs, but this can be equally extended and applied to transmission through a plurality of panels. In addition, in this document, an operation of a UE receiving a signal from the TRP1/TRP2 may be interpreted/described as an operation (or may be an operation) of a UE receiving a signal from a network side (through/using TRP1/2) and an operation of a UE transmitting a signal to TRP1/TRP2 may be interpreted/described as an operation (or may be an operation) of a UE transmitting a signal to a network side (through/using TRP1/TRP2), and vice versa.

A UE may receive configuration information from a BS (network side) (e.g., TRP 1) (S110). The configuration information may be configuration information based on one or more of the above Embodiments 1/2/3 and detailed examples thereof. Specifically, the configuration information may include information on at least one of a default spatial parameter (or default spatial relation) related to uplink transmission and a default PL RS. Here, a UE may be a single-panel UE and/or a multi-panel UE.

The uplink transmission may include at least one of a PUCCH, an SRS, and a PUSCH.

For example, the configuration information may include information on at least one of a default spatial parameter or a default PL RS for the uplink transmission related to STRP. Based on the configuration information, a default spatial parameter and a default PL RS related to all (Tx) panels of a UE may be configured as one RS for each uplink transmission (e.g., PUCCH/SRS/PUSCH).

The one RS may include at least one of a DL RS and a UL RS.

The DL RS may include at least one of a QCL Type-D RS corresponding to the lowest CORESET ID or a QCL Type-D RS indicated by a TCI state corresponding to the lowest ID among TCI states for an activated PDSCH.

The UL RS may be a QCL Type-D RS (e.g., SRS) in a DL TCI state. Here, the default PL RS may be set to a PL RS configured/activated/indicated in the UL RS, and the default spatial parameter may be based on a spatial parameter of the corresponding UL RS (or a reference RS for the corresponding UL RS).

As an additional example, the configuration information may include information on at least one of a default spatial parameter or a default PL RS for the uplink transmission related to MTRP. Based on the configuration information, the default spatial parameter and default PL RS may be configured (differently) for each target TRP and/or TO.

Specifically, a default spatial parameter and a default PL RS of a specific uplink channel for each TRP/TO may be determined based on one or more of a specific CORESET within a group of CORESETs associated with/configured in each TRP/TO, or a specific CORESET according to a specific cell among cell(s) configured in each TRP/TO. The configuration information may include information on a CORESET for each TRP/TO related to the default spatial parameter/default PL RS. The default spatial parameter/default PL RS associated with each TRP/TO may be determined based on a CORESET (or CORESET group) associated with the corresponding TRP/TO. The associated CORESET (or CORESET group) may be a CORESET (or CORESET group) related to a specific cell (e.g., a cell having the lowest ID) among serving cell(s) configured in a UE. The default spatial parameter/default PL RS associated with each TRP/TO may be set to a QCL Type-D RS corresponding to the associated CORESET (or a QCL Type-D RS corresponding to the lowest CORESET ID in the associated CORESET group).

For example, the configuration information may include information indicating enable/disable (or on/off) related to utilization of the default spatial parameter/default PL RS (eg, enableDefaultBeampPl for specific uplink transmission).

For example, an operation in which a UE (100/200 in FIG. 15) in the above-described step S110 receives configuration information from a BS (e.g., TRP1) (200/100 in FIG. 15) may be implemented by an apparatus of FIG. 15 to be described below. For example, referring to FIG. 15, one or more processors 102 may control one or more transceivers 106 and/or one or more memories 104 to receive configuration information from BS 200, and one or more transceivers 106 may receive configuration information from BS 200.

A UE may receive DCI from a BS (e.g., TRP1/TRP2) (S120/S125). The DCI may be based on UL grant DCI or DL grant/allocation DCI. For example, the DCI may be based on DCI for scheduling/triggering transmission of the uplink transmission (e.g., PUSCH/SRS). As another example, the DCI may be based on DCI for scheduling a PDSCH. In this case, the uplink transmission may be based on a PUCCH (for A/N use) for transmission of HARQ-ACK information for the PDSCH. UL/DL transmission/reception related to the DCI (e.g., PDSCH, PUCCH, SRS, PUSCH) may be single DCI-based UL/DL transmission/reception or multiple DCI-based UL/DL transmission/reception.

For the single DCI-based operation, a UE may receive the DCI from a BS (e.g., TRP1) (S120). For the multi-DCI-based operation, a UE may receive the DCI from a BS (e.g., TRP1 and TRP2), respectively (S120 and S125) .

For example, the DCI may be transmitted in a specific CORESET configured through the configuration information.

The DCI may include transmission beam information (or spatial parameter indication information) for a plurality of TRP/TOs. For example, the DCI may include a plurality of SRI fields or a plurality of UL-TCI fields. As another example, the DCI may include one SRI field or one UL TCI field associated with the plurality of transmission beam information (or reference RSs). In this case, information on association between an indication value of an SRI/UL-TCI field and the plurality of transmission beam information (e.g., configuration for codepoint candidate(s)) may be included in the configuration information.

Based on that the uplink transmission is an (A/N) PUCCH, the transmission beam information may be based on a PRI field. In this case, a transmission beam for each TRP/TO may be indicated based on one or more of configuring/mapping a plurality of spatial parameters to each codepoint based on the PRI field (e.g., spatial relation info/UL TCI state/unified TCI state) or configuring/mapping a plurality of PUCCH resources to each codepoint based on the PRI field.

The DCI may be transmitted from TRP 1 to a UE on a first PDCCH in a first CORESET (S120), and the DCI may be transmitted from TRP 2 to a UE on a second PDCCH in a second CORESET (S125). Here, a first CORESET and a second CORESET may belong to different CORESET pools. For example, a first CORESET may belong to CORESET pool index 0, and a second CORESET may belong to CORESET pool index 1.

Here, the first PDCCH and the second PDCCH may correspond to different channels or may correspond to the same channel.

For example, an operation in which a UE (100/200 in FIG. 15) receives DCI from a BS (200/100 in FIG. 15) in steps S120/S125 described above may be implemented by an apparatus of FIG. 15 to be described below. For example, referring to FIG. 15, one or more processors 102 may control one or more transceivers 106 and/or one or more memories 104 to receive DCI from a BS 200, and the one or more transceivers 106 may receive DCI from a BS 200.

A UE may perform uplink transmission to a BS (e.g., TRP1/TRP2) (S130/S135). The uplink transmission may be transmitted based on the DCI. The uplink transmission may be performed based on at least one of the above-described Embodiments 1/2/3 and detailed examples thereof.

For example, when a spatial parameter and a PL RS for the uplink transmission are not configured and a use of the default spatial parameter and the default PL RS is enabled (or on) through the configuration information, the uplink transmission may be transmitted based on the default spatial parameter (or default spatial relation) and may be transmitted with transmit power determined based on the default PL RS. For example, the uplink transmission may be performed using the same spatial domain filter as reception of an RS determined as the default spatial relation, and transmission power of the uplink transmission may be determined based on a pathloss calculated using an RS determined as the default PL RS.

For example, when a CORESET is not configured in a CC/BWP related to the uplink transmission or the uplink transmission is based on a single DCI-based MTRP transmission method, the uplink transmission may be performed as follows. Specifically, TCI state(s) may be mapped/associated to codepoints according to a TCI state field included in the (DL grant) DCI. Based on TCI state(s) indicated by the lowest codepoint among the codepoints, the default spatial parameter and default PL RS may be configured. The uplink transmission may be transmitted based on the default spatial parameter and may be transmitted with transmit power determined based on the default PL RS.

For example, an operation in which a UE (100/200 in FIG. 15) performs uplink transmission to a BS (200/100 in FIG. 15) in steps S130/S135 described above may be implemented by an apparatus of FIG. 15 to be described below. For example, referring to FIG. 15, one or more processors 102 may control one or more transceivers 106 and/or one or more memories 104 to perform uplink transmission to a BS 200, and one or more transceivers 106 may perform uplink transmission to BS 200.

The above-described operation is only described based on a UE for convenience of description, and is not intended to limit the scope of application of the above-described embodiments to a UE operation. Specifically, the above-described embodiments may be applied to a BS operation. That is, each of the above steps (S110 to S135) can be interpreted/applied as a BS operation. A transmission operation of a UE may be interpreted/applied to a reception operation of a BS (e.g., TRP1 / TRP2), and a reception operation of a UE may be interpreted/applied to a transmission operation of a BS (e.g., TRP1/TRP2) .

As mentioned above, the above-described UE operation and/or BS operation (e.g., operation based on at least one of Embodiments 1/2/3 and its detailed examples) may be implemented by an apparatus to be described below (e.g., the device of FIG. 15). For example, a UE may correspond to a transmitting device/first device, and a BS may correspond to a receiving device/second device, and vice versa according to circumstances. In addition, the above-described operation of a UE and/or a BS (e.g., operation based on at least one of the Embodiments 1/2/3 and its detailed examples) may be processed by the processor 102/202 of FIG. 15, and an operation of a UE and/or a BS (e.g., operation based on at least one of Embodiments 1/2/3 and its detailed examples) may be stored in memory (e.g., the memory 104/204 of FIG. 15) in the form of instructions/programs (e.g., instruction(s), one or more executable code(s)) for driving at least one processor.

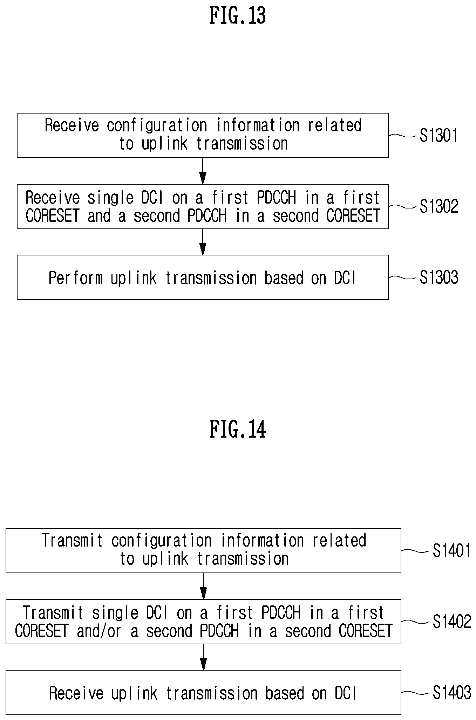

FIG. 13 is a diagram illustrating an operation of a UE for an uplink transmission and reception method according to an embodiment of the present disclosure.

In FIG. 13, an operation of a UE based on the previously proposed method (e.g., any one of Embodiments 1 to 3 or a combination of one or more (detailed) embodiments) is illustrated. The example of FIG. 13 is for convenience of description and does not limit the scope of the present disclosure. Some step(s) illustrated in FIG. 13 may be omitted depending on circumstances and/or settings. In addition, a UE in FIG. 13 is only one example, and may be implemented as a device illustrated in FIG. 15 below. For example, the processor 102/202 of FIG. 15 may control transmission and reception of channels/signals/data/information, etc. (e.g., RRC signaling, MAC CE, DCI for UL/DL scheduling, SRS, PDCCH, PDSCH, PUSCH, PUCCH, PHICH, etc.) using the transceiver 106/206, and may control to store transmitted or received channels/signals/data/information in the memory 104/204.

Referring to FIG. 13, a UE receives configuration information related to uplink transmission (S1301).

For example, based on M-TRP transmission, configuration information related to uplink transmission may be received from any one (or more) TRP (e.g., base station) participating in M-TRP transmission.

Here, a default spatial parameter (or default spatial relation)/default PL RS for uplink transmission of a UE may be configured/assumed. In addition, whether to enable a default spatial parameter (or default spatial relation)/default PL RS-based operation may be configured for a UE by a base station. In other words, a default spatial relation or default PL RS for the uplink transmission may be configured (i.e., enabled) or may not be configured (i.e., disabled) for the UE by the configuration information related to the uplink transmission.

For example, whether to enable a default spatial parameter/default PL RS-based operation for a corresponding uplink transmission may be configured through an enableDefaultBeamPl parameter for a specific uplink transmission (e.g., PUSCH/PUCCH/SRS).

A UE receives single DCI on a first PDCCH in a first CORESET and a second PDCCH in a second CORESET (S1302).

For example, based on M-TRP transmission, the DCI may be transmitted from TRP 1 to a UE on a first PDCCH in a first CORESET, and the DCI may be transmitted from TRP 2 to a UE on a second PDCCH in a second CORESET.

Here, the same DCI may mean a DCI format including the same information. In addition, different search space sets may correspond to each TRP, and PDCCHs (i.e., a first PDCCH and a second PDCCH) for the same DCI (carrying the same DCI) may be repeatedly transmitted at a plurality of monitoring occasions (or search spaces) of different search space sets.

Here, a first CORESET and a second CORESET may belong to different CORESET pools. For example, a first CORESET may belong to CORESET pool index 0, and a second CORESET may belong to CORESET pool index 1.

Here, according to the previously proposed Embodiment 3, among the CORESET pools to which the first CORESET and the second CORESET belong, a representative CORESET pool may be determined as one of i) a CORESET pool configured by the base station, ii) a CORESET pool to which a CORESET having a specific ID (e.g., lowest/highest ID) belongs, iii) a CORESET pool associated with a PDCCH that appears first in time order or corresponds to the lowest subcarrier index in frequency order among the first PDCCH and the second PDCCH.

Here, the first PDCCH and the second PDCCH may correspond to different channels or may correspond to the same channel (one channel with the same actual time/frequency/spatial resources or actual time/frequency/spatial resources are different but considered as the same channel).

A UE performs uplink transmission based on DCI (S1303) .

For example, based on M-TRP transmission, a UE may perform the uplink transmission for both TRPs 1 and 2, and may perform the uplink transmission for only one of TRPs 1 and 2.

The uplink transmission may correspond to one of a Physical Uplink Shared Channel (PUSCH), a Physical Uplink Control Channel (PUCCH), and a Sounding Reference Signal (SRS).

The uplink transmission may be performed based on at least one of the above-described Embodiments 1/2/3 and detailed examples thereof.

Based on a default spatial relation or default PL RS for the uplink transmission being configured for the UE by the configuration information, the uplink transmission may be transmitted based on the default spatial relation or the default PL RS. For example, the uplink transmission may be performed using the same spatial domain filter as reception of an RS determined as the default spatial relation, or transmission power of the uplink transmission may be determined based on a pathloss calculated using an RS determined as the default PL RS.

For example, according to the above Embodiment 3, the default spatial relation or the default PL RS may be determined based on whether one or more CORESETs are configured within a frequency band (e.g., CC, cell, or BWP) in which the uplink transmission is to be performed.

Specifically, when one or more CORESETs within a frequency band (e.g., CC, cell, or BWP) in which the uplink transmission is to be performed are configured, a QCL RS (e.g., QCL type-D reference RS) for a spatial reception parameter configured in a CORESET having a specific ID (e.g., lowest/highest ID) in the representative CORESET pool may be determined as the default spatial relation or the default PL RS.

Alternatively, when one or more CORESETs are configured in a frequency band (e.g., CC, cell, or BWP) in which the uplink transmission is to be performed, regardless of a representative CORESET pool, a QCL RS (e.g., QCL type-D reference RS) for a spatial reception parameter configured in a CORESET having a specific ID (e.g., lowest/highest ID) among the one or more CORESETs may be determined as the default spatial relation or the default PL RS.

Here, a QCL RS (e.g., QCL type-D reference RS) for a plurality of CORESET spatial reception parameters having the specific ID (e.g., lowest/highest ID) may be configured. In this case, a QCL RS (e.g., QCL type-D reference RS) for a spatial reception parameter configured by a specific TCI state (e.g., lowest/highest TCI state ID) may be determined as the default spatial relation or the default PL RS.

Alternatively, it may be determined only for one or more CORESETs for which a QCL RS (e.g., QCL type-D reference RS) is configured for a single spatial reception parameter within a frequency band (e.g., CC, cell, or BWP) in which the uplink transmission is to be performed. That is, among one or more CORESETs in which a QCL RS for a single spatial reception parameter is configured, a QCL RS for a spatial reception parameter configured in a CORESET with a specific ID may be determined as the default spatial relation or the default PL RS.

On the other hand, when a CORESET is not configured in a frequency band (e.g., CC, cell, or BWP) in which the uplink transmission is performed, in a TCI list of a PDSCH activated for the representative CORESET pool in a frequency band (e.g., CC, cell, or BWP) in which the uplink transmission is to be performed, a QCL RS (e.g., QCL type-D reference RS) for a spatial reception parameter indicated by a specific TCI state may be determined as the default spatial relation or the default PL RS.

Alternatively, a single TCI list of a PDSCH may be activated regardless of a CORESET pool in a frequency band (e.g., CC, cell, or BWP) in which the uplink transmission is to be performed. In this case, when a CORESET is not configured within a frequency band (e.g., CC, cell, or BWP) in which the uplink transmission is to be performed, a QCL RS (e.g., QCL type-D reference RS) for a spatial reception parameter indicated by a specific TCI state in the single TCI list may be determined as the default spatial relation or the default PL RS.

Meanwhile, the uplink transmission may also be transmitted based on M-TRP. That is, a first uplink transmission may be transmitted toward a first TRP in a first TO (group), and a second uplink transmission may be transmitted toward a second TRP in a second TO (group). In this case, uplink QCL RSs for a plurality of spatial reception parameters configured in a CORESET having a specific ID (e.g. lowest/highest ID) among one or more CORESETs configured in a frequency band (e.g. CC, cell or BWP) in which the uplink transmission is to be performed may be determined as the default spatial relation or the default PL RS for the uplink transmission transmitted in the first TO and the second TO, respectively.

FIG. 14 is a diagram illustrating an operation of a base station for a method for transmitting and receiving channel state information according to an embodiment of the present disclosure.

In FIG. 14, an operation of a base station based on the previously proposed method (e.g., any one of Embodiments 1 to 3 or a combination of one or more (detailed) embodiments) is illustrated. The example of FIG. 14 is for convenience of description and does not limit the scope of the present disclosure. Some step(s) illustrated in FIG. 14 may be omitted depending on circumstances and/or settings. In addition, a base station in FIG. 14 is only one example, and may be implemented as a device illustrated in FIG. 15 below. For example, the processor 102/202 of FIG. 15 may control transmission and reception of channels/signals/data/information, etc. (e.g., RRC signaling, MAC CE, DCI for UL/DL scheduling, SRS, PDCCH, PDSCH, PUSCH, PUCCH, PHICH, etc.) using the transceiver 106/206, and may control to store transmitted or received channels/signals/data/information in the memory 104/204.

Referring to FIG. 14, a base station transmits configuration information related to uplink transmission to a UE (S1401).

For example, based on M-TRP transmission, configuration information related to uplink transmission may be trasnmitted from any one (or more) TRP (e.g., base station) participating in M-TRP transmission.

Here, a default spatial parameter (or default spatial relation)/default PL RS for uplink transmission of a UE may be configured/assumed. In addition, whether to enable a default spatial parameter (or default spatial relation)/default PL RS-based operation may be configured for a UE by a base station. In other words, a default spatial relation or default PL RS for the uplink transmission may be configured (i.e., enabled) or may not be configured (i.e., disabled) for the UE by the configuration information related to the uplink transmission.

For example, whether to enable a default spatial parameter/default PL RS-based operation for a corresponding uplink transmission may be configured through an enableDefaultBeamPl parameter for a specific uplink transmission (e.g., PUSCH/PUCCH/SRS).

A base station transmits single DCI on a first PDCCH in a first CORESET and/or a second PDCCH in a second CORESET (S1402) .

Here, for example, based on M-TRP transmission, the DCI may be transmitted from TRP 1 to a UE on a first PDCCH in a first CORESET, and the DCI may be transmitted from TRP 2 to a UE on a second PDCCH in a second CORESET.

If each of multiple TRPs corresponds to different base stations, the PDCCH may be transmitted from different base stations. On the other hand, if multiple TRPs correspond to one base station (e.g., multiple TRPs correspond to different cells within a base station), the PDCCH is transmitted from different TRPs but can be transmitted from one base station.

Here, the same DCI may mean a DCI format including the same information. In addition, different search space sets may correspond to each TRP, and PDCCHs (i.e., a first PDCCH and a second PDCCH) for the same DCI (carrying the same DCI) may be repeatedly transmitted at a plurality of monitoring occasions (or search spaces) of different search space sets.

Here, a first CORESET and a second CORESET may belong to different CORESET pools. For example, a first CORESET may belong to CORESET pool index 0, and a second CORESET may belong to CORESET pool index 1.

Here, according to the previously proposed Embodiment 3, among the CORESET pools to which the first CORESET and the second CORESET belong, a representative CORESET pool may be determined as one of i) a CORESET pool configured by the base station, ii) a CORESET pool to which a CORESET having a specific ID (e.g., lowest/highest ID) belongs, iii) a CORESET pool associated with a PDCCH that appears first in time order or corresponds to the lowest subcarrier index in frequency order among the first PDCCH and the second PDCCH.

Here, the first PDCCH and the second PDCCH may correspond to different channels or may correspond to the same channel (one channel with the same actual time/frequency/spatial resources or actual time/frequency/spatial resources are different but considered as the same channel).

A base station receives uplink transmission based on DCI (S1403).

The uplink transmission may correspond to one of a Physical Uplink Shared Channel (PUSCH), a Physical Uplink Control Channel (PUCCH), and a Sounding Reference Signal (SRS).

The uplink transmission may be performed based on at least one of the above-described Embodiments 1/2/3 and detailed examples thereof.

Based on a default spatial relation or default PL RS for the uplink transmission being configured for the UE by the configuration information, the uplink transmission may be transmitted based on the default spatial relation or the default PL RS. For example, the uplink transmission may be performed using the same spatial domain filter as reception of an RS determined as the default spatial relation, or transmission power of the uplink transmission may be determined based on a pathloss calculated using an RS determined as the default PL RS.

For example, according to the above Embodiment 3, the default spatial relation or the default PL RS may be determined based on whether one or more CORESETs are configured within a frequency band (e.g., CC, cell, or BWP) in which the uplink transmission is to be performed.

Specifically, when one or more CORESETs within a frequency band (e.g., CC, cell, or BWP) in which the uplink transmission is to be performed are configured, a QCL RS (e.g., QCL type-D reference RS) for a spatial reception parameter configured in a CORESET having a specific ID (e.g., lowest/highest ID) in the representative CORESET pool may be determined as the default spatial relation or the default PL RS.

Alternatively, when one or more CORESETs are configured in a frequency band (e.g., CC, cell, or BWP) in which the uplink transmission is to be performed, regardless of a representative CORESET pool, a QCL RS (e.g., QCL type-D reference RS) for a spatial reception parameter configured in a CORESET having a specific ID (e.g., lowest/highest ID) among the one or more CORESETs may be determined as the default spatial relation or the default PL RS.

Here, a QCL RS (e.g., QCL type-D reference RS) for a plurality of CORESET spatial reception parameters having the specific ID (e.g., lowest/highest ID) may be configured. In this case, a QCL RS (e.g., QCL type-D reference RS) for a spatial reception parameter configured by a specific TCI state (e.g., lowest/highest TCI state ID) may be determined as the default spatial relation or the default PL RS.

Alternatively, it may be determined only for one or more CORESETs for which a QCL RS (e.g., QCL type-D reference RS) is configured for a single spatial reception parameter within a frequency band (e.g., CC, cell, or BWP) in which the uplink transmission is to be performed. That is, among one or more CORESETs in which a QCL RS for a single spatial reception parameter is configured, a QCL RS for a spatial reception parameter configured in a CORESET with a specific ID may be determined as the default spatial relation or the default PL RS.

On the other hand, when a CORESET is not configured in a frequency band (e.g., CC, cell, or BWP) in which the uplink transmission is performed, in a TCI list of a PDSCH activated for the representative CORESET pool in a frequency band (e.g., CC, cell, or BWP) in which the uplink transmission is to be performed, a QCL RS (e.g., QCL type-D reference RS) for a spatial reception parameter indicated by a specific TCI state may be determined as the default spatial relation or the default PL RS.

Alternatively, a single TCI list of a PDSCH may be activated regardless of a CORESET pool in a frequency band (e.g., CC, cell, or BWP) in which the uplink transmission is to be performed. In this case, when a CORESET is not configured within a frequency band (e.g., CC, cell, or BWP) in which the uplink transmission is to be performed, a QCL RS (e.g., QCL type-D reference RS) for a spatial reception parameter indicated by a specific TCI state in the single TCI list may be determined as the default spatial relation or the default PL RS.

Meanwhile, the uplink transmission may also be transmitted based on M-TRP. That is, a first uplink transmission may be transmitted toward a first TRP in a first TO (group), and a second uplink transmission may be transmitted toward a second TRP in a second TO (group). In this case, uplink QCL RSs for a plurality of spatial reception parameters configured in a CORESET having a specific ID (e.g. lowest/highest ID) among one or more CORESETs configured in a frequency band (e.g. CC, cell or BWP) in which the uplink transmission is to be performed may be determined as the default spatial relation or the default PL RS for the uplink transmission transmitted in the first TO and the second TO, respectively.

General Device to which the Present Disclosure may be applied

FIG. 15 is a diagram which illustrates a block diagram of a wireless communication device according to an embodiment of the present disclosure.

In reference to FIG. 15, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machinereadable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

1. A method of performing uplink transmission in a wireless communication system, the method performed by a user equipment (UE) comprising:

   receiving, from a base station, configuration information related to uplink transmission;
   receiving, from the base station, single downlink control information (DCI) on a first physical downlink control channel (PDCCH) in a first CORESET and a second PDCCH in a second CORESET, wherein the first CORESET and the second CORESET belong to different CORESET pools; and
   performing, to the base station, the uplink transmission based on the DCI,
   wherein based on a default spatial relation or a default pathloss reference signal (PL RS) for the uplink transmission being configured for the UE by the configuration information, the uplink transmission is transmitted based on the default spatial relation or the default PL RS, and
   wherein the default spatial relation or the default PL RS is determined based on whether one or more CORESETs are configured in a frequency band in which the uplink transmission is to be performed.

2. The method of claim 1, wherein among the CORESET pools to which the first CORESET and the second CORESET belong, a representative CORESET pool is determined as one of i) a CORESET pool configured by the base station, ii) a CORESET pool to which a CORESET having a specific identity (ID) belongs, iii) a CORESET pool associated with a PDCCH that appears first in time order or corresponds to the lowest subcarrier index in frequency order among the first PDCCH and the second PDCCH.

3. The method of claim 2, wherein based on the one or more CORESETs being configured in the frequency band in which the uplink transmission is to be performed, and
wherein a quasi co-location (QCL) reference signal (RS) for a spatial reception parameter configured in a CORESET having a specific identity (ID) in the representative CORESET pool is determined as the default spatial relation or the default PL RS.

4. The method of claim 1, wherein based on the one or more CORESETs being configured in the frequency band in which the uplink transmission is to be performed, and
wherein a QCL RS for a spatial reception parameter configured in a CORESET having a specific identity (ID) among the one or more CORESETS is determined as the default spatial relation or the default PL RS.

5. The method of claim 2, wherein based on any CORESET being not configured in the frequency band in which the uplink transmission is to be performed, and
wherein a QCL RS for a spatial reception parameter indicated by a specific TCI state is determined as the default spatial relation or the default PL RS in a TCI list of a physical downlink shared channel (PDSCH) activated for the representative CORESET pool in the frequency band in which the uplink transmission is to be performed.

6. The method of claim 1, wherein based on any CORESET being not configured in the frequency band in which the uplink transmission is to be performed,

wherein a single TCI list of a PDSCH is activated regardless of a CORESET pool in the frequency band in which the uplink transmission is to be performed, and
wherein a QCL RS for a spatial reception parameter indicated by a specific TCI state in the single TCI list is determined as the default spatial relation or the default PL RS.

7. The method of claim 3, wherein based on a QCL RS for a plurality of spatial reception parameters being configured in the CORESET having the specific ID, and
wherein a QCL RS for a spatial reception parameter configured by a specific TCI state is determined as the default spatial relation or the default PL RS.

8. The method of claim 1, wherein among one or more CORESETs in which a QCL RS is configured for a single spatial reception parameter in the frequency band in which the uplink transmission is to be performed, and
wherein a QCL RS for a spatial reception parameter configured in a CORESET with a specific ID is determined as the default spatial relation or the default PL RS.

9. The method of claim 1, wherein the uplink transmission corresponds to one of a physical uplink shared channel (PUSCH), a physical uplink control channel (PUCCH), or a sounding reference signal (SRS).

10. The method of claim 1, wherein the uplink transmission is performed using the same spatial domain filter as reception of a RS determined to be the default spatial relation, or
transmission power of the uplink transmission is determined based on pathloss calculated using a RS determined to be the default PL RS.

11. The method of claim 1, wherein based on the uplink transmission being repeatedly transmitted at a first transmission occasion (TO) and a second TO, and
wherein QCL RSs for a plurality of spatial reception parameters configured in a CORESET having a specific ID among one or more CORESETs configured in the frequency band in which the uplink transmission is to be performed are determined as the default spatial relations or the default PL RSs for the uplink transmission transmitted in the first TO and the second TO, respectively.

12. The method of claim 1, wherein the frequency band is any one of a component carrier (CC), a cell, or a bandwidth part (BWP) .

13. A user equipment (UE) of performing uplink transmission in a wireless communication system, the UE comprising:

at least one transceiver for transmitting and receiving a wireless signal; and
at least one processor for controlling the at least one transceiver,
wherein the at least one processor configured to:

receive, from a base station, configuration information related to uplink transmission;

receive, from the base station, single downlink control information (DCI) on a first physical downlink control channel (PDCCH) in a first CORESET and a second PDCCH in a second CORESET, wherein the first CORESET and the second CORESET belong to different CORESET pools; and

perform, to the base station, the uplink transmission based on the DCI,

wherein based on a default spatial relation or a default pathloss reference signal (PL RS) for the uplink transmission being configured for the UE by the configuration information, the uplink transmission is transmitted based on the default spatial relation or the default PL RS, and

wherein the default spatial relation or the default PL RS is determined based on whether one or more CORESETs are configured in a frequency band in which the uplink transmission is to be performed.

**14.** At least one non-transitory computer-readable medium storing at least one instruction, wherein the at least one instruction executable by at least one processor controls a device of performing uplink transmission to:

receive, from a base station, configuration information related to uplink transmission;

receive, from the base station, single downlink control information (DCI) on a first physical downlink control channel (PDCCH) in a first CORESET and a second PDCCH in a second CORESET, wherein the first CORESET and the second CORESET belong to different CORESET pools; and

perform, to the base station, the uplink transmission based on the DCI,

wherein based on a default spatial relation or a default pathloss reference signal (PL RS) for the uplink transmission being configured for the user equipment by the configuration information, the uplink transmission is transmitted based on the default spatial relation or the default PL RS, and

wherein the default spatial relation or the default PL RS is determined based on whether one or more CORESETs are configured in a frequency band in which the uplink transmission is to be performed.

**15.** A processing apparatus configured to control a user equipment (UE) for performing uplink transmission in a wireless communication system, the processing apparatus comprising:

at least one processor; and

at least one computer memory operably connected to the at least one processor and storing instructions that, based on being executed by the at least one processor, perform operations comprising:

receiving, from a base station, configuration information related to uplink transmission;

receiving, from the base station, single downlink control information (DCI) on a first physical downlink control channel (PDCCH) in a first CORESET and a second PDCCH in a second CORESET, wherein the first CORESET and the second CORESET belong to different CORESET pools; and

performing, to the base station, the uplink transmission based on the DCI,

wherein based on a default spatial relation or a default pathloss reference signal (PL RS) for the uplink transmission being configured for the UE by the configuration information, the uplink transmission is transmitted based on the default spatial relation or the default PL RS, and

wherein the default spatial relation or the default PL RS is determined based on whether one or more CORESETs are configured in a frequency band in which the uplink transmission is to be performed.

**16.** A method of receiving uplink transmission in a wireless communication system, the method performed by a base station comprising:

transmitting, to a user equipment (UE), configuration information related to uplink transmission;

transmitting, to the UE, single downlink control information (DCI) on a first physical downlink control channel (PDCCH) in a first CORESET and/or a second PDCCH in a second CORESET, wherein the first CORESET and the second CORESET belong to different CORESET pools; and

receiving, from the UE, the uplink transmission based on the DCI,

wherein based on a default spatial relation or a default pathloss reference signal (PL RS) for the uplink transmission being configured for the UE by the configuration information, the uplink transmission is transmitted based on the default spatial relation or the default PL RS, and

wherein the default spatial relation or the default PL RS is determined based on whether one or more CORESETs are configured in a frequency band in which the uplink transmission is to be performed.

**17.** A base station of receiving uplink transmission in a wireless communication system, the base station comprising:

at least one transceiver for transmitting and receiving a wireless signal; and
at least one processor for controlling the at least one transceiver,
wherein the at least one processor configured to:

transmit, to a user equipment (UE), configuration information related to uplink transmission;
transmit, to the UE, single downlink control information (DCI) on a first physical downlink control channel (PDCCH) in a first CORESET and/or a second PDCCH in a second CORESET, wherein the first CORESET and the second CORESET belong to different CORESET pools; and
receive, from the UE, the uplink transmission based on the DCI,
wherein based on a default spatial relation or a default pathloss reference signal (PL RS) for the uplink transmission being configured for the UE by the configuration information, the uplink transmission is transmitted based on the default spatial relation or the default PL RS, and
wherein the default spatial relation or the default PL RS is determined based on whether one or more CORESETs are configured in a frequency band in which the uplink transmission is to be performed.

# FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

Size depends
on subcarrier
spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbols

# FIG.3

One Subframe

$14 \cdot 2^{\mu}$ OFDM Symbol

$k = N_{RB}^{\mu} N_{SC}^{RB} - 1$

Resource Block

Resource Element
– In a resource grid, $(k, \bar{l})$
– In a resource block, $(k, l)$

$N_{RB}^{\mu} N_{SC}^{RB} - 1$ Subcarrier

$N_{SC}^{RB}$ Subcarrier

$k = 0$

$l = 0$      $l = 14 \cdot 2^{\mu} - 1$

# FIG.4

# FIG.5

Resource grid

A carrier
(up to 3300 subcarriers,i,e.,275 RBs)

A BWP

1 RB=12 subcarrier

1 RE

1 subcarrier

1 Symbol

k=0

l=0 ·····

# FIG.6

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S601

S602

S603

S604

S605

S606

S607

S608

· DL/UL ACK/NACK
· UE CQI/PMI RI REPORT
  USING PUSCH AND PUCCH

FIG.7

# FIG.8

(a)

| R | Serving Cell ID | | BWP ID | Oct 1 |
|---|---|---|---|---|
| R | PUCCH Resource ID | | | Oct 2 |
| $S_7$ | $S_6$ | $S_5$ | $S_4$ | $S_3$ | $S_2$ | $S_1$ | $S_0$ | Oct 3 |

(b)

| R | Serving Cell ID | BWP ID | Oct 1 |
|---|---|---|---|
| R | PUCCH Resource ID | | Oct 2 |
| R | R | Spatial Relation Info ID | Oct 3 |

. . .

| R | PUCCH Resource ID | | Oct 2N-2 |
|---|---|---|---|
| R | R | Spatial Relation Info ID | Oct 2N-1 |

## FIG.9

| R | Serving Cell ID | | | BWP ID | Oct 1 |
|---|---|---|---|---|---|
| R | R | R | R | SRS Resource Set ID | Oct 2 |
| R | R | Pathloss Reference RS ID | | | Oct 3 |

## FIG.10

| R | Serving Cell ID | BWP ID | Oct 1 |
|---|---|---|---|
| R | C | PUSCH Pathloss Reference RS ID | Oct 2 |
| SRI $ID_0$ | | SRI $ID_1$ | Oct 3 |

· · ·

| SRI $ID_{2N-6}$ | SRI $ID_{2N-6}$ | Oct N |
|---|---|---|

## FIG.11

EP 4 311 335 A1

# FIG.12

Network side

| TRP 2 | TRP 1 | | UE |

Configuration information — S110

DCI — S120

DCI — S125

Uplink transmission — S130

Uplink transmission — S135

FIG.13

Receive configuration information related
to uplink transmission — S1301

Receive single DCI on a first PDCCH in a first
CORESET and a second PDCCH in a second CORESET — S1302

Perform uplink transmission based on DCI — S1303

FIG.14

Transmit configuration information related
to uplink transmission — S1401

Transmit single DCI on a first PDCCH in a first
CORESET and/or a second PDCCH in a second CORESET — S1402

Receive uplink transmission based on DCI — S1403

EP 4 311 335 A1

# FIG.15

<table>
<tr><td colspan="2" align="center">INTERNATIONAL SEARCH REPORT</td><td colspan="2">International application No.<br><br>**PCT/KR2022/003643**</td></tr>
</table>

**A. CLASSIFICATION OF SUBJECT MATTER**

**H04W 72/04**(2009.01)i; **H04L 5/00**(2006.01)i; **H04W 72/12**(2009.01)i; **H04B 7/0413**(2017.01)i; **H04B 7/06**(2006.01)i; **H04B 7/024**(2017.01)i

According to International Patent Classification (IPC) or to both national classification and IPC

**B. FIELDS SEARCHED**

Minimum documentation searched (classification system followed by classification symbols)

H04W 72/04(2009.01); H04W 72/14(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: CORESET, PDCCH, 단일의 하향링크 제어 정보 (single downlink control information), 다른 (different), 디폴트 경로손실 참조 신호 (default pathloss reference signal)

**C. DOCUMENTS CONSIDERED TO BE RELEVANT**

| Category* | Citation of document, with indication, where appropriate, of the relevant passages | Relevant to claim No. |
|---|---|---|
| A | VIVO. Discussion on enhancement on PDCCH, PUCCH, PUSCH in MTRP scenario. R1-2005364, 3GPP TSG RAN WG1 #102-e, e-Meeting. 08 August 2020.<br>See sections 2.3-4.3. | 1-17 |
| A | APPLE INC. Remaining Issues on Multi-beam operation. R1-2006495, 3GPP TSG- RAN WG1 Meeting # 102-e, e-Meeting. 08 August 2020.<br>See section 4. | 1-17 |
| A | OPPO. FL summary for Multi-TRP/Panel Transmission. R1-2004370, 3GPP TSG RAN WG1 #101, e-Meeting. 19 May 2020.<br>See sections 2-2.15. | 1-17 |
| A | OPPO. Text Proposals for Multi-beam Operation Enhancement. R1-2005976, 3GPP TSG RAN WG1 #102-e, e-Meeting. 07 August 2020.<br>See sections 2-3. | 1-17 |
| A | US 2020-0314860 A1 (ZHOU, Hua et al.) 01 October 2020 (2020-10-01)<br>See paragraphs [0401]-[0402]; and figure 24. | 1-17 |

☐ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **30 June 2022** | **30 June 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/003643**

| Patent document cited in search report | Publication date (day/month/year) | Patent family member(s) | Publication date (day/month/year) |
|---|---|---|---|
| US 2020-0314860 A1 | 01 October 2020 | None | |

Form PCT/ISA/210 (patent family annex) (July 2019)